(19) Europäisches Patentamt
European Patent Office
Office européen des brevets

(11) EP 2 881 639 A1

(12) EUROPEAN PATENT APPLICATION
published in accordance with Art. 153(4) EPC

(43) Date of publication:
10.06.2015 Bulletin 2015/24

(21) Application number: 13825493.3

(22) Date of filing: 01.08.2013

(51) Int Cl.:
*F16L 11/04* (2006.01) *B32B 1/02* (2006.01)
*B32B 1/08* (2006.01) *B32B 27/30* (2006.01)
*C08L 27/12* (2006.01) *C08L 29/04* (2006.01)

(86) International application number:
PCT/JP2013/070887

(87) International publication number:
WO 2014/021422 (06.02.2014 Gazette 2014/06)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 02.08.2012 JP 2012171808
20.08.2012 JP 2012181585

(71) Applicant: The Nippon Synthetic Chemical Industry Co., Ltd.
Osaka-shi, Osaka 530-0018 (JP)

(72) Inventors:
- SHIBUTANI Mitsuo
Osaka-shi
Osaka 530-0018 (JP)
- KANDA Taiji
Osaka-shi
Osaka 530-0018 (JP)
- HIRANO Yasuhiro
Osaka-shi
Osaka 530-0018 (JP)
- INAKUMA Akinobu
Osaka-shi
Osaka 530-0018 (JP)

(74) Representative: Kuhnen & Wacker
Patent- und Rechtsanwaltsbüro
Prinz-Ludwig-Straße 40A
85354 Freising (DE)

# (54) HIGH-PRESSURE GAS HOSE OR STORAGE VESSEL

(57) Disclosed is a high-pressure gas hose or storage vessel comprising at least one layer of a resin composition comprising (A) 1,2-diol in a side chain-containing vinyl alcohol-based resin, and (B) fluororesin having polar functional group capable of reacting with or forming hydrogen bond(s) with hydroxyl group. The gas-barrier layer comprising the resin composition has a favorable wettability of the interface between the component (A) and the component (B), and therefore the gas-barrier layer exhibits high level gas-barrier property without causing blister under the condition of high pressure of not only oxygen or air but also small molecule gas such as hydrogen. Furthermore, the gas barrier layer has superior flexibility and superior durability with respect to changes accompanying the supply and removal of high-pressure gas.

EP 2 881 639 A1

## Description

### TECHNICAL FIELD

The present invention relates to high-pressure gas transfer hose or high-pressure gas storage vessel, in particular, relates to high-pressure gas hose suitable for supplying hydrogen gas to an automotive fuel cell and so on or high-pressure storage vessel suitable for storing high pressure hydrogen gas.

### BACKGROUND ART

In the past, metal pipe such as SUS316L pipe has been mainly studied for a hydrogen gas supply hose for supplying hydrogen gas to a fuel cell at a hydrogen filling station or the like. However, the SUS316L pipe has some problems such that handleability is inferior because of its non-flexibility and SUS316L is very costly. In the case of employing other metal for a metal pipe, hydrogen embrittlement may be occurred. For these reasons, development of a hose made of rubber or resin is going forward recently. A general hose made from rubber or resin is a multilayer hose comprising a gas-barrier layer, and a reinforcing layer in order to prevent hydrogen gas leak and secure its durability.

Exemplary multilayer hoses disclosed in, for example, JP2007-15279A (patent document 1) and JP2009-19717A (patent document 2), employ ethylene-vinyl alcohol copolymer (hereinafter, sometimes called as "EVOH resin") layer for a gas-barrier layer. The multilayer hoses are proposed to use olefin-based resin or polyethylene terephthalate-based resin for an inner surface layer because of their good water resistance, and use nylon-based resin (patent document 1) or rubber having insulation (patent document 2) for an outer surface layer so that the outer surface layer inhibits moisture permeation into the EVOH resin layer to prevent adverse influence on the gas barrier property of the EVOH resin layers. It is also proposed to further comprise a reinforcing layer of braided or spiral-type fabric of organic or metallic filaments.

Also, JP2006-168358A (patent document 3) discloses a gas transfer tube for hydrogen, oxygen, carbon dioxide and the like, which is a multilayer tube comprising an inner layer made of fluorine-based polymer such as ethylene-tetrafluoroethylene and polyvinylidene chloride, an intermediate layer made of EVOH resin, and an outer layer made of polyamide. The patent document 3 teaches that it is preferable to interpose an adhesive layer between the intermediate layer and the inner layer, or between the intermediate layer and the outer layer, and to employ a modified polyamide for the adhesive layer.

Moreover, JP2007-218338A (patent document 4) discloses a high-pressure gas hose for facilities of supplying liquefied propane gas, which comprises a gas-barrier layer made of polyamide resin, a reinforcing layer made of spiral-type fabric of organic or metallic filaments, and an inner layer made of vulcanized rubber for providing the hose with flexibility.

In addition, JP2010-31993A (patent document 5) proposes a hose which comprises an inner surface layer made of a thermoplastic resin having $1\times10^{-8}$cc·cm/cm$^2$·sec·cmHg or less of gas permeability coefficient of dry hydrogen gas at 90 °C, and a reinforcing layer of braided fabric of poly-p-phenylene benzbisoxazole (PBO) filaments. Examples of the thermoplastic resin for the gas barrier layer include nylon, poly acetal, and EVOH resin (paragraph 0011), and nylon is employed in Example. The patent document 5 explains in paragraph 0021 that the employment of PBO filaments for a reinforcing layer makes it possible to tolerate pressures of about 70 to 80 MPa without hydrogen embrittlement.

As for a material of storage vessels for hydrogen gas fuel, metal was commonly used, however, resin liner for weight reduction has become common in recent years. For example, JP2005-68300A (patent document 6) proposes a resin composition comprising a saponified ethylene-vinyl acetate copolymer in 80 to 40 wt% and acid modified ethylene-$\alpha$-olefin copolymer rubber and/or acid modified thermoplastic elastomer in 20 to 60 wt% as a liner for the hydrogen gas storage vessel. The resin composition is melt-moldable and may provide a single-layered liner satisfying both the hydrogen gas-barrier property and impact resistance at low temperature.

### PRIOR ART

### PATENT DOCUMENT

[patent document 1] JP2007-15279A
[patent document 2] JP2009-19717A
[patent document 3] JP2006-168358A
[patent document 4] JP2007-218338A
[patent document 5] JP2010-31993A

[patent document 6] JP2005-68300A

## SUMMARY OF THE INVENTION

## TECHNICAL PROBLEM TO BE SOLVED BY THE INVENTION

As described above, a multilayer hose is given flexibility by appropriately designing inner layer, outer layer, and reinforcing layer, and moreover the gas-barrier layer is protected by arranging as an intermediate layer. However, since the molecule size of the hydrogen is smaller than other gases such as oxygen and carbon dioxide, hydrogen is likely to be dissolved and penetrate in the resin layer.

In addition, there is a recent demand for downsizing hydrogen gas storage vessel used for supplying hydrogen gas to an automotive fuel cell. In this connection, an amount of hydrogen gas for a mileage comparable to a current gasoline-powered vehicle is needed to be filled rapidly into the downsized hydrogen gas storage vessel at a time through a hose. Therefore, more improved hydrogen gas barrier property, lower hydrogen solubility, and more improved hydrogen brittleness durability are required for the practical use of high-pressure (35 to 90 MPa) hydrogen gas transfer hose and the storage vessel for storing such high-pressure hydrogen gas.

However, assessments of high-pressure hydrogen gas permeability and durability were not conducted in any of the above-listed patent documents, and the hoses and/or storage vessels disclosed in them are insufficient for the practical use.

The present invention has been made under the circumstances, and has an object to provide a high-pressure gas hose or storage vessel having high-level gas-barrier property, particularly, barrier property for high-pressure hydrogen, and having durability sufficient for maintaining the excellent gas-barrier property over a long period of time.

## MEANS FOR SOLVING THE PROBLEMS

The present inventors examined gas-barrier property and durability against high-pressure hydrogen gas with respect to multilayer structures employing a polyamide resin or EVOH resin for a gas-barrier layer as being suggested in the prior art, and they have found that the change of gas pressure inside the multilayer hose or storage vessel affects their hydrogen gas-barrier property. In particular, they have found some cases that blister or cracking accompanied with an internal fracture is occurred due to expansion of hydrogen gas dissolved in the resin layer, when the pressure in the high-pressure hydrogen gas supply hose is reduced to atmospheric pressure from a high-pressure, in other words, when de-pressured. Furthermore, they have found that excellent initial hydrogen gas-barrier property cannot ensure sufficient durability against repeated supply and removal of highly pressurized hydrogen gas. Additionally, hydrogen gas-barrier property does not show the same behavior as the gas barrier property and durability against other gases such as oxygen and carbon dioxide because of the molecular size of hydrogen smaller than the other gases.

Moreover, the present inventors paid their attention to the polyvinyl alcohol-based resin known as a resin having a higher gas-barrier property than conventionally used gas-barrier resins including polyamide resin and EVOH resin. Hereinafter, the polyvinyl alcohol-based resin is sometimes called as "PVA resin". Although a typical PVA resin is difficult to be melt-mold, a specific PVA resin having a specific structure is capable of being melt-molded and being employed for a construction material or liner material of hose or storage vessel. However, since the PVA resin is harder and poorer in flexibility and flex-crack-resistance than EVOH resin, PVA resin is needed to solve the problems on flex crack resistance associated with durability against the repeated supply and removal of high-pressure gas.

Then, in order to enhance the barrier property and its durability against gas, especially hydrogen gas, lower hydrogen solubility, and improve flexibility of EVOH resin and PVA resin, the present inventors have made investigations on improvement of EVOH resin and PVA resin itself, as well as alloy with other resins, and have completed the invention.

A high-pressure gas hose or storage vessel of the present invention comprises at least one layer comprising a resin composition (A) vinyl alcohol-based resin containing 1,2-diol structural unit represented by the following general formula (1), and (B) fluorocarbon resin containing a polar functional group capable of reacting with or forming hydrogen bond(s) with hydroxyl group.

[formula 1]

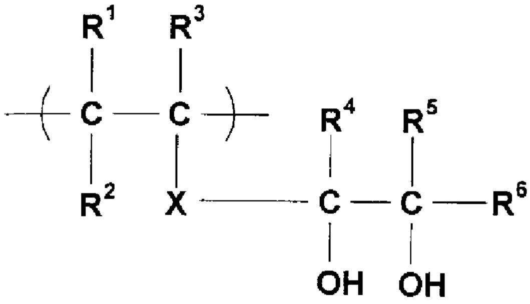

(1)

In the formula, each of $R^1$ - $R^3$ is independently hydrogen or an organic group, X is single bond or a binding chain, and each of $R^4$- $R^6$ is independently hydrogen or an organic group.

The present invention is preferably applied as a hose or storage vessel for a high-pressure gas, in particular, gas having a molecular weight less than 10.

**EFFECT OF THE INVENTION**

Since the high-pressure gas hose or storage vessel of the present invention comprises a gas barrier layer having excellent gas barrier property and flexibility, the hose or storage vessel is resistant to repeated supply and removal of high-pressure gas, in particular, hydrogen gas being a small molecule.

**BRIEF DESCRIPTION OF THE DRAWINGS**

Fig. 1 is a schematic view for explaining the structure of the hydrogen permeability measuring apparatus used in Example.
Fig. 2 is a diagram showing configuration of a test piece used in Example.
Fig. 3 is a schematic diagram showing an apparatus used for high-pressure hydrogen exposure cycles conducted in Example.
Fig. 4 is a diagram showing the pressure pattern employed for hydrogen exposure cycles.
Fig. 5 is a diagram for explaining hydrogen exposure cycles for the test of the multilayer hose.
Fig. 6 is a scanning electron micrograph (10000 magnification) of the film of resin composition No. 4.
Fig. 7 is a scanning electron micrograph (10000 magnification) of the film of resin composition No. 5.
Fig. 8 is a scanning electron micrograph (10000 magnification) of the film of resin composition No. 7.
Fig. 9 is a scanning electron micrograph (10000 magnification) of the film of resin composition No. 13.
Fig. 10 is a graph showing the relationship of the content ratio versus melt viscosity of the polar functional group-containing fluorocarbon resin (B) with respect to the resin composition Nos. 1 to 5.

**MODES FOR CARRYING OUT THE INVENTION**

The following description is a merely example (typical example) of embodiment of the present invention, and therefore the invention is not intended to be identified to the description.

First of all, the resin composition as a raw material for a gas-barrier layer in the high-pressure gas hose or storage vessel of the present invention will be explained.

< resin composition for gas-barrier layer>

The gas-barrier layer of a hose or storage vessel of the present invention is made from a resin composition comprising (A) vinyl alcohol-based resin containing a specific structure, and (B) fluorocarbon resin containing polar functional group capable of reacting with or forming hydrogen bond(s) with hydroxyl group (hereinafter, the component (B) is called as "polar functional group-containing fluorocarbon resin (B)"). Each component will described below.

[(A) side chain 1,2-diol-containing vinyl alcohol-based resin]

The above-mentioned (A) vinyl alcohol-based resin having a specific structure is vinyl alcohol-based resin containing 1,2-diol structural unit in a side chain represented by the following formula (1) (hereinafter, called as "side chain 1,2-diol-containing vinyl alcohol-based resin"). The vinyl alcohol-based resin (A) may contain a structural unit derived from other comonomer as needed.

A vinyl alcohol-based resin containing a structural unit derived from ethylene is known as ethylene-vinyl alcohol copolymer (EVOH resin), which is a thermoplastic resin. The EVOH resin has a melting point apart from its decomposition temperature owing to the structural unit derived from ethylene, and therefore is melt-moldable and water-insoluble. EVOH resins having such properties have usually 20 to 60 mol% of ethylene structural unit.

As for PVA resin, the content of the units other than side chain 1,2-diol structural unit and vinyl alcohol structural unit, namely structural units derived from ethylene and another comonomer is usually 10 mol% or less in view of ensuring water-solublity of PVA resin. However, the polyvinyl alcohol resin (PVA resin) called in this specification has a content less than 20 mol% of structural units other than side chain 1,2-diol structural unit and vinyl alcohol structural unit because the PVA resin used in the invention is a specific PVA resin, i.e. side chain 1,2-diol-containing PVA-based resin.

Hereinafter, side chain 1,2-diol-containing vinyl alcohol-based resin is sometimes called as (A') side chain 1,2-diol-containing PVA resin or (A") side chain 1,2-diol-containing EVOH resin, when needed to distinguish between them.

Although the side chain 1,2-diol-containing PVA resin is water-soluble and classified into polyvinyl alcohol, the side chain 1,2-diol-containing PVA resin has a melting point apart from its decomposition temperature and therefore has an advantage of melt-moldability over a general polyvinyl alcohol without 1,2-diol in a side chain.

The side chain 1,2-diol-containing vinyl alcohol-based resin is hardly reduced in degree of crystallization caused by changes of external environment, and is able to ensure excellent gas-barrier property, as compared with a general vinyl alcohol-based resin without 1,2-diol in a side chain. Hereinafter, when distinguishing the general vinyl alcohol-based resin from side chain 1,2-diol-containing vinyl alcohol-based resin, the general vinyl alcohol-based resin is sometimes called as "unmodified vinyl alcohol-based resin", "unmodified PVA resin" or "unmodified EVOH resin", depending on cases. Since the side chain 1,2-diol structural units are not incorporated into lamella crystal of polymer main chain, the side chain 1,2-diol-containing PVA resin has lower crystalline due to amorphous portion of the side chain 1,2-diol structural units. In this connection, it may be anticipated that gas-barrier property of the side chain 1,2-diol-containing PVA resin would be lower than that of counterpart unmodified PVA resin or unmodified EVOH resin. Surprisingly, as a result of research by the present inventors, in the case of gas-barrier property against small molecule gas such as hydrogen, side chain 1,2-diol-containing vinyl alcohol-based resin exhibits more excellent gas barrier property than unmodified vinyl alcohol-based resin, which is beyond anticipated result. Such results beyond anticipation is supposed that dense network could be formed by hydrogen bonds between side chain 1,2-diol structural units to reduce free volume (i.e. volume size of vacant) in the amorphous portion, thereby preventing small-sized molecule gas such as hydrogen gas from permeation or penetration. Furthermore, as described later, the side chain 1,2-diol-containing vinyl alcohol-based resin can react with polar functional group or form hydrogen bond of the component (B) based on a primary hydroxyl group of the side chain 1,2-diol-containing vinyl alcohol-based resin. Therefore, interface affinity between the component (A) and the component (B) would be enhanced by compatibility through the reaction between them. From the view of this point, it could be expected to strike a balance between high-pressure hydrogen resistance, namely suppression of generating blister and flexibility.

First, the structural unit in the (A) side chain 1,2-diol-containing vinyl alcohol-based resin will be explained.

(A) side chain 1,2-diol-containing vinyl alcohol-based resin contains a) structural unit called as side chain 1,2-diol structural unit represented by the following formula (1); b) vinyl alcohol structural unit derived from vinyl ester-based monomer; and according to needs, c) comonomer unit optionally copolymerized. The comonomer unit is typically ethylene unit derived from ethylene monomer, which is distinguished from a structural unit derived from a non-ethylene comonomer called as "other comonomer unit"). Now, these structural units will be explained in order.

a) side chain 1,2-diol structural unit

[formula 1]

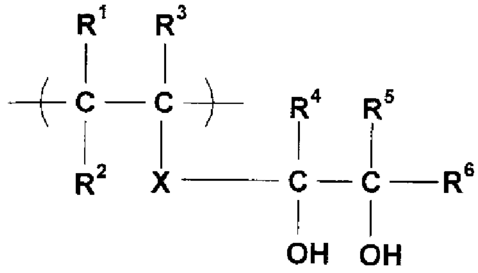

(1)

In the above general formula (1), each of $R^1$ - $R^3$ is independently hydrogen or an organic group, X is single bond or a binding chain, each of $R^4$ - $R^6$ is independently hydrogen or organic group.

It is preferred that all of $R^1$- $R^6$ are hydrogen, however, they may be an organic group as far as the resin properties are not drastically impaired. The organic group is not limited but preferable examples of the organic group include alkyl group having from 1 to 4 carbon atoms such as methyl, ethyl, n-propyl, isopropyl, n-butyl, isobutyl, and tert-butyl. The organic group may contain a substituting group such as halogen, hydroxyl group, ester group, carboxylic acid group, or sulfonic acid group, according to needs. All of $R^1$ - $R^3$ are preferably alkyl groups each having from 1 to 4 carbon atoms, particularly preferably hydrogen. All of $R^4$ - $R^6$ are preferably alkyl groups each having from 1 to 4 carbon atoms, particularly preferably hydrogen.

In the general formula (1), X is single bond or a binding chain, preferably single bond, in the view of enhancement of crystalline or reducing free volume (i.e. free volume size of vacant) in amorphous portion. Examples of the binding chain include hydrocarbon such as alkylene, alkenylene, alkynylene, phenylene, naphthylene (these hydrocarbons may be substituted by halogen such as fluorine, chlorine, or bromine), as well as ether bond-containing unit such as -O-, -$(CH_2O)m$-, -$(OCH_2)m$-, or -$(CH_2O)nCH_2$-; carbonyl group-containing unit such as -CO-, -COCO-, - $CO(CH_2)mCO$-, or -$CO(C_6H_4)CO$-; sulfur atom-containing unit such as -S-, -CS-, -SO-, or -$SO_2$-; nitrogen atom-containing group unit such as -NR-, -CONR-, -NRCO-, -CSNR-, -NRCS-, or - NRNR-; hetero atom such as phosphorus-containing unit such as -$HPO_4$-; silicon atom-containing unit such as -$Si(OR)_2$-, -$OSi(OR)_2$-, or -$OSi(OR)_2O$-; titanium atom-containing unit such as - $Ti(OR)_2$-, -$OTi(OR)_2$-, or -$OTi(OR)_2O$-; and metal atom such as aluminum-containing unit such as - Al(OR)-, -OAl(OR)-, or -OAl(OR)O-. In these structural units, each R is independently arbitrary substituting group, and preferably hydrogen or an alkyl group, and m is natural number, usually selected from 1 to 30, preferably 1 to 15, particularly preferably 1 to 10. Among them, hydrocarbon chain having from 1 to 10 carbon atoms is preferable, hydrocarbon chain having from 1 to 6 carbon atoms is more preferable, hydrocarbon chain having one carbon atom is particularly preferable, from the viewpoint of stability in production or use.

The most preferred 1,2-diol structural unit represented by the above general formula (1) is the structural unit represented by the following structural formula (1a), wherein all of $R^1$- $R^3$ and $R^4$- $R^6$ are hydrogen and X is single bond.

[formula 1a]

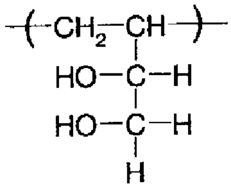

(1a)

The side chain 1,2-diol structural unit is produced by, but not limited to, (i) a method of saponifying a copolymer of a vinyl ester-based monomer and a compound represented by the following general formula (2); (ii) a method of saponifying and decarboxylating a copolymer of a vinyl ester-based monomer and vinyl ethylene carbonate represented by the following general formula (3); (iii) a method of saponifying and deketalizating a copolylmer of vinyl ester-based monomer and 2,2-dialkyl-4-vinyl-1,3-dioxolane represented by the following general formula (4).

During such copolymerization, if necessary, it is possible to copolymerize the above-mentioned comonomer c) by adding the comonomer c) to the reaction system.

[formula 2]

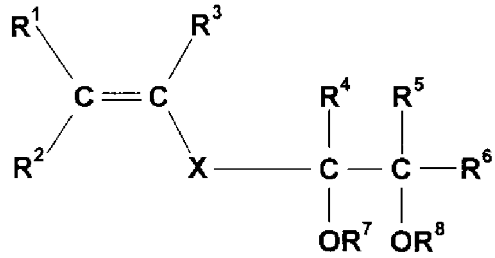

(2)

[formula 3]

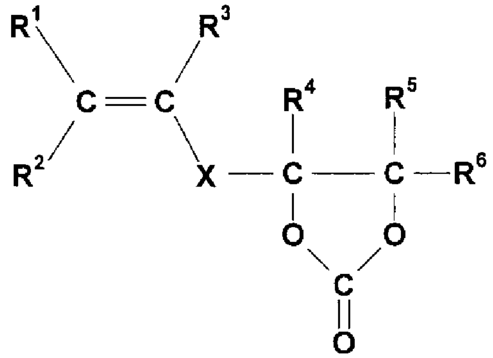

(3)

[formula 4]

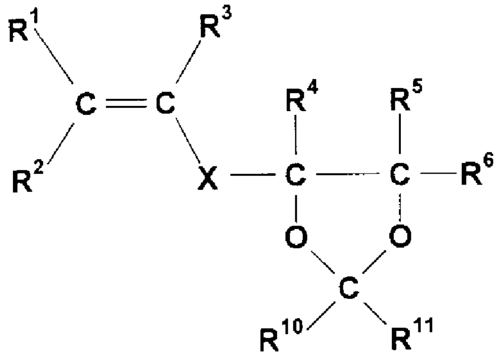

(4)

In the formula (2), (3) and (4), each of $R^1$- $R^6$ is the same as that of formula (1) respectively. $R^7$and $R^8$ are each independently hydrogen or $R^9$-CO- (in the formula, $R^9$ is an alkyl group having 1 to 4 carbon atoms). $R^{10}$ and $R^{11}$ are each independently hydrogen or an organic group.

As to the methods for (i), (ii) and (iii), for example, the known methods described in JP2002-284818, JP2004-075866, JP2004-285143, JP2004-359965 and JP2006-096815 etc. can be adopted.

Among them, the method (i) is preferable because of excellence in copolymerization reactivity and industrial handling. In the method (i), 3,4-diacyloxy-1-butene wherein $R^1$- $R^6$ are hydrogen, X is single bond, $R^7$, $R^8$ are $R^9$-CO-, and $R^9$ is an alkyl group, in particular, 3,4-diacetoxy-1-butene wherein $R^9$ is methyl group is preferably used.

Polymerization may be conducted by a known polymerization method such as solution polymerization, suspension polymerization, emulsion polymerization, and so on. In the case that ethylene is copolymerized, solution polymerization of vinyl ester-based monomer is conducted in the presence of pressurized ethylene gas.

Saponification of the obtained copolymer may be conducted by a known saponification method. According to the known method, the obtained copolymer dissolved in alcohol or water/alcohol solvent is saponified in the presence of alkali catalyst or acid catalyst. As for the alkali catalyst, hydroxide or alcoholate of alkali metal such as potassium hydroxide, sodium hydroxide, sodium methylate, sodium ethylate, potassium methylate, or lithium methylate may be used.

The content of 1,2-diol in a side chain in the (A) side chain 1,2-diol-containing vinyl alcohol-based resin is

usually from 0.1 to 30 mol%. The content of side chain 1,2-diol structural unit may be calculated based on measurement result of $^1$H-NMR of the side chain 1,2-diol-containing vinyl alcohol-based resin.

In the case of side chain 1,2-diol-containing PVA resin, the content of side chain 1,2-diol structural unit is usually from 2 to 15 mol%, preferably from 4 to 12 mol%, more preferably from 5 to 8 mol%. When the content of side chain 1,2-diol structural unit is too high, free volume in amorphous portion makes smaller, which is favorable in the point of lowering hydrogen solubility, but productivity of side chain 1,2-diol-containing PVA tends to be lowered. On the other hand, the content of side chain 1,2-diol structural unit in side chain 1,2-diol-containing PVA resin is too low, the melting point of the side chain 1,2-diol-containing PVA resin is close to its decomposition point, and therefore it becomes difficult to be melt-molded, resulting in bringing disadvantage in forming a multilayer hose or the like. Moreover, hydrogen permeation coefficient tends to be increased, and therefore hydrogen gas-barrier property is lowered, resulting in increasing the amount of hydrogen dissolution in the PVA resin.

In the case of side chain 1,2-diol-containing EVOH resin, the content of side chain 1,2-diol structural unit in the side chain 1,2-diol-containing EVOH resin, is usually from 0.5 to 10 mol%, preferably from 1 to 5 mol%, particularly preferably from 2 to 5 mol%. When the content of side chain 1,2-diol structural unit is too high, free volume in amorphous portion becomes smaller, which is favorable in the point of lowering hydrogen solubility, but is unfavorable in the point of decreasing the productivity of side chain 1,2-diol-containing EVOH resin or becoming difficult in increasing polymerization degree. On the other hand, when the content of side chain 1,2-diol structural unit is too low, hydrogen permeation coefficient tends to be increased and hydrogen gas-barrier property is lowered, as a result, the amount of hydrogen dissolution in the EVOH resin is increased.

b) vinyl alcohol structural unit

Vinyl alcohol structural unit is usually produced by saponification of the structural unit derived from vinyl ester-based monomer in the vinyl ester-based polymer or copolymer. Accordingly, (A) side chain 1,2-diol-containing vinyl alcohol-based resin having a saponification degree less than100 mol% contains vinyl ester structural unit.

Vinyl acetate is typically used for the vinyl ester-based monomer, because of high availability in the market and high removal efficiency in production. Besides vinyl acetate, for example, aliphatic vinyl ester such as vinyl formate, vinyl acetate, vinyl propionate, vinyl valerate, vinyl butyrate, vinyl isobutyrate, vinyl pivalate, vinyl caprate, vinyl laurate, vinyl stearate, and vinyl versatate; and aromatic vinyl ester such as vinyl benzoate may be used. Usually, aliphatic vinyl ester having 3 to 20 carbon atoms, preferably having 4 to 10 carbon atoms, particularly preferably 4 to 7 carbon atoms is used. These are usually used alone, but if necessary, two or more may be combined.

c) comonomer unit

The component (A), namely, side chain 1,2-diol-containing vinyl alcohol-based resin may contain another structural unit derived from a comonomer other than the monomer serving the side chain 1,2-diol structural unit and vinyl alcohol-based monomer, and optional ethylene. The comonomer is sometimes called as "other comonomer".

The following comonomer may be used for producing the side chain 1,2-diol-containing PVA resin (A'): $\alpha$-olefin such as ethylene and propylene; hydroxy group-containing $\alpha$-olefins such as 3-buten-1-ol and 4-penten-1-ol; vinylene carbonates or unsaturated acids such as acrylic acid, or salt or mono- or di-alkyl ester thereof; nitriles such as acrylonitrile; amides such as methacrylamide; olefin sulfonic acid such as ethylene sulfonic acid, allyl sulfonic acid or methallyl sulfonic acid; silyl group-containing monomer such as vinyl-trimethoxysilane or vinyl-triethoxysilane, or a salt thereof. Among them, ethylene is particularly preferable because ethylene is capable of forming a eutectic with a vinyl alcohol structural unit.

The total content of ethylene and other comonomer in the side chain 1,2-diol-containing PVA resin (A') used in the invention is usually from 0 mol% to less than 20 mol%, preferably from 0 mol% to 15 mol%, more preferably 0 to 10 mol%, from the viewpoint of less influence on hydrogen dissolution amount at high pressure.

Examples of the other comonomer, namely comonomer other than ethylene used for the production of side chain 1,2-diol-containing EVOH resin (A"), include olefins such as propylene, 1-butene, and isobutene; unsaturated acids such as acrylic acid, methacrylic acid, crotonic acid, phthalic acid (or phthalic anhydride), maleic acid (or maleic anhydride), itaconic acid (or itaconic anhydride), or a salt thereof, or mono- or di-alkyl ester having from 1 to 18 carbon atoms thereof; acrylamides such as acrylamide, N-alkyl acrylamide having from 1 to 18 carbon atoms, N,N-dimethylacrylamide, 2-acrylamide propanesulfonic acid or salt thereof, acrylamide propyl dimethylamine or a salt thereof or quaternary salt thereof; methacrylamides such as methacrylamide, N-alkylmethacrylamide having from 1 to 18 carbon atoms, N,N-dimethylmethacrylamide, 2-methacrylamide propanesulfonic acid or a salt thereof, methacrylamide propyl dimethylamine or a salt thereof or quaternary salt thereof; N-vinylamides such as N-vinylpyrrolidone, N-vinylformamide and N-vinylacetamide; vinyl cyanides such as acrylonitrile and methacrylonitrile; vinyl ethers such as alkyl vinyl ether having from 1 to 18 carbon atoms, hydroxy alkyl vinyl ether, and alkoxyalkylvinyl ether; vinyl halide compound such as

vinyl chloride, vinylidene chloride, vinyl fluoride, vinylidene fluoride and vinyl bromide; vinylsilanes such as trimethoxyvinylsilane; allyl halide compound such as allyl acetate and allyl chloride; allyl alcohols such as allyl alcohol and dimethoxy allyl alcohol; trimethyl-(3-acrylamide-3-dimethylpropyl)-ammonium chloride; acrylamide-2-methylpropanesulfonic acid; silyl group-containing monomers such as vinyl-trimethoxysilane, vinyl-triethoxysilane, and so on. These monomers may be used alone or the combination of two or more of them.

The content of the other comonomer other than ethylene in the side chain 1,2-diol-containing EVOH resin (A") is usually 5 mol% or less from the viewpoint of not impairing the properties inherent in EVOH resin.

The polymerization degree of side chain 1,2-diol-containing vinyl alcohol-based resin mentioned above is usually from 250 to 1000.

The saponification degree of the vinyl ester portion of side chain 1,2-diol-containing vinyl alcohol-based resin is appropriately selected from the range of usually 80 to 100 mol%, as a measurement value in accordance with JIS K6726, according to the construction of the side chain 1,2-diol-containing vinyl alcohol-based resin, desired property and so on.

(A') side chain 1,2-diol-containing PVA resin

In the case that side chain 1,2-diol-containing PVA resin is employed for the side chain 1,2-diol-containing vinyl alcohol-based resin, it is preferable to have additional features mentioned below.

The polymerization degree of the side chain 1,2-diol-containing PVA resin is in the range of usually 250 to 1000, preferably 300 to 650, more preferably 400 to 500, furthermore preferably 440 to 480. Unduly high polymerization degree causes a higher melting viscosity, as a result, the resulting resin composition tends to become difficult in melt-molding due to unduly load to the extruder. And the resin temperature is elevated due to shear heating when melt-kneading, resulting in bringing deterioration of the resin. On the contrary, unduly low polymerization degree causes to make a molded article fragile, resulting in easily cracking the gas-barrier layer and lowering gas-barrier property, particularly barrier property against a small molecule gas including hydrogen gas.

The saponification degree is in the range of usually 98 to 100 mol%, preferably 99 to 99.9 mol%, more preferably 99.5 to 99.8 mol%. Unduly low saponification degree makes lower the content of OH group, and tends to lower gas-barrier property.

The content of the side chain 1,2-diol structural unit is in the range of usually 2 to 15 mol%, preferably 4 to 12 mol%, more preferably 5 to 8 mol%, as mentioned above.

(A") side chain 1,2-diol-containing EVOH resin

In the case that side chain 1,2-diol-containing EVOH resin is employed for the side chain 1,2-diol-containing vinyl alcohol-based resin, it is preferred to have additional features mentioned below.

The content of the side chain 1,2-diol structural unit in the side chain 1,2-diol-containing EVOH resin is in the range of usually 0.5 to 10 mol%, preferably 1 to 5 mol%, particularly preferably 2 to 5 mol%, as mentioned above.

The content of ethylene unit in the side chain 1,2-diol-containing EVOH resin is in the range of usually 20 to 60 mol%, preferably 25 to 50 mol%, more preferably 28 to 48 mol%, as a measurement value of the content of ethylene strucutral unit in accordance with ISO14663. Unduly low content of the ethylene structural unit causes to enhance hygroscopicity, and thereby lowering gas-barrier property under high humidity condition, and melt-molding processability. As a result, an appearance of the resulting molded article including hose and liner layer of a storage vessel tends to be impaired. On the contrary, unduly high content of ethylene structural unit leads the percentage of OH group in the polymer chain to be excessively lowered, resulting in lowering gas-barrier property.

The saponification degree of vinyl ester portion of the side chain 1,2-diol-containing EVOH resin is in the range of usually 80 to 100 mol%, preferably 90 to 100 mol%, more preferably 98 to 100 mol%, as a measurement value in accordance with JIS K6726 in which the solution homogeneously dissolved in water/methanol solvent is measured. Unduly low saponification degree causes to make the content of OH group decreased, resulting in lowering hydrogen gas-barrier property.

The side chain 1, 2-diol-containing EVOH resin having such construction has a melting point of usually 100 to 220 °C, preferably 130 to 200 °C, particularly preferably 140 to 190 °C, as measured with differential scanning calorimetry (elevating rate: 10 °C/min). The side chain 1,2-diol-containing EVOH resin tends to have a lower melting point and exhibits more excellent stretchability, as compared with an unmodified EVOH resin.

The polymerization degree of the EVOH resin is usually indicated as a melt flow rate. The melt flow rate (MFR) under the load of 2160 g at 220 °C of the side chain 1,2-diol-containing EVOH resin is in the range of usually 1 to 30g/10min, preferably 2 to 15g/10min, particularly preferably 3 to 10g/10min. In the case that the MFR is too small, the melt moldability of side chain 1,2-diol-containing EVOH resin tends to be lowered due to high torque condition in an extruder when extruding. On the contrary, in the case that the MFR is too high, uniformaty of the thickness of the resulting

gas-barrier layer tends to be lowered.

According to the present invention, one type as well as the combination of two or more types of side chain 1,2-diol-containing EVOH resins may be used for the side chain 1,2-diol-containing EVOH resin in the resin composition. The side chain 1,2-diol-containing EVOH resins different in saponification degree, molecular weight, kind of other comonomer, or ethylene structural unit content by percentage may be combined.

In the case that different types of two or more of side chain 1,2-diol-containing EVOH resins are blended, the method of blending is not particularly limited, but examples of the method include a method of mixing each paste of vinyl ester-based copolymer and thereafter saponifying; a method of mixing solutions of side chain 1,2-diol-containing EVOH resin after saponification dissolved in alcohol or a mixture of water and alcohol; a method of mixing pellets or powders of side chain 1,2-diol-containing EVOH resin and thereafter melt-kneading.

According to the present invention, the mixture of side chain 1,2-diol-containing PVA resin (A') and 1,2-diol in a side chain-containing EVOH resin (A") may be used as the component (A).

[(B) polar functional group-containing fluororesin]

A polar functional group-containing fluororesin used in the present invention is a fluorine-based polymer in which polar functional group capable of reacting with or forming hydrogen bond(s) with hydroxyl group is introduced into fluororesin.

The polar functional group is preferably carbonyl-containing group or hydroxyl group, more preferably carbonyl-containing group.

The carbonyl-containing group is preferably at least one selected from the group consisting of carbonate group, haloformyl group, aldehyde group including formyl group, ketone group, carboxyl group, alkoxycarbonyl group, carboxylic anhydride group, and isocyanate group, more preferably carbonate group, fluoroformyl group, chloroformyl group, carboxyl group, methoxycarbonyl group, ethoxycarbonyl group, or carboxylic anhydride group, further more preferably carboxylic anhydride group.

Such polar functional group-containing fluororesin contributes to enhance the interface bonding between a portion of side chain 1,2-diol-containing vinyl alcohol-based resin and the polar functional group-containing fluororesin by forming a chemical bond between them due to the polar functional group capable of reacting with or forming hydrogen bond with hydroxyl group. Alternatively, such polar functional group-containing fluororesin and a portion side chain 1,2-diol-containing vinyl alcohol-based resin reacts to produce a block copolymer, which could act as a compatibilizing agent for enhancing the interface bonding between the side chain 1,2-diol-containing vinyl alcohol-based resin and the polar functional group-containing fluororesin.

Moreover, the polar functional group-containing fluororesin exhibits a low hydrogen dissolution amount under the condition of 70 MPa of hydrogen gas, which is a similar feature to a fluororesin having no polar functional group. Therefore it is expected that a mixture of side chain 1,2-diol-containing vinyl alcohol-based resin and polar functional group-containing fluororesin would also exhibit low hydrogen solubility like side chain 1,2-diol-containing vinyl alcohol-based resin alone.

The fluororesin for the polar functional group-containing fluororesin is preferably fluorine-based copolymer including at least tetrafluoroethylene as a constituent monomer. In the fluorine-based copolymer, other fluorine-containing vinyl monomer such as hexafluoropropylene, vinylidene fluoride, perfluoro(alkyl vinyl ether), monomer represented by $CH_2=CX(CF_2)_nY$ wherein X and Y is independently fluorine atom or hydrogen atom, and n is 2 to 10 (hereinafter, the monomer is called as "FAE"), as well as olefin-based vinyl monomer such as ethylene or propylene, vinyl ethers, vinyl esters, or other halogen-containing vinyl monomer may be copolymerized.

In the formula of the above-mentioned FAE, n is preferably from 2 to 8, more preferably 2 to 6, in particular 2, 4, or 6. When n is less than 2, there is a tendency that heat resistance or stress cracking resistance of the molded article of the resin composition may be lowered. When n is more than 10, there is a case that polymerization reactivity may be insufficient. When n is in the range of 2 to 8, polymerization reactivity of FAE is good. Further, a molded article with excellence in heat resistance and stress cracking resistance can be easily obtained. FAE may be used alone or in combination. Preferred examples of such FAE are $CH_2=CH(CF_2)_2F$, $CH_2=CH(CF_2)_4F$, $CH_2=CH(CF_2)_6F$, $CH_2=CF(CF_2)_3H$, and the like. $CH_2=CH\text{-}Rf$ (Rf is perfluoroalkyl group having from 2 to 6 carbon atoms) is most preferred.

Specific examples of the fluororesin include tetrafluoroethylene/perfluoro(alkyl vinyl ether)-based copolymer, tetrafluoroethylene/hexafluoropropylene-based copolymer, tetrafluoroethylene/perfluoro(alkyl vinyl ether)/hexafluoropropylene-based copolymer, ethylene/tetrafluoroethylene-based copolymer, ethylene/chlorotrifluoroethylene-based copolymer, ethylene/tetrafluoroethylene/hexafluoropropylene-based copolymer, ethylene/tetrafluoroethylene/$CH_2=CH\text{-}Rf$ (Rf is perfluoroalkyl group having from 2 to 6 carbon atoms)-based copolymer, ethylene/tetrafluoroethylene/hexafluoropropylene/$CH_2=CH\text{-}Rf$ (Rf is perfluoroalkyl group having from 2 to 6 carbon atoms)-based copolymer, and the like.

Among them, fluorine-based copolymer containing ethylene as a constituent monomer is preferred. The fluorine-based copolymer containing ethylene is preferable one selected from the group consisting of ethylene/tetrafluoroethylene-based copolymer, ethylene/tetrafluoroethylene/ hexafluoropropylene-based copolymer, ethylene/tetrafluoroethylene/$CH_2$=CH-Rf (Rf is perfluoroalkyl group having from 2 to 6 carbon atoms)-based copolymer, and ethylene/tetrafluoroethylene/hexafluoropropylene/$CH_2$=CH-Rf (Rf is perfluoroalkyl group having from 2 to 6 carbon atoms)-based copolymer. More preferably, it is ethylene/tetrafluoroethylene/hexafluoropropylene-based copolymer, ethylene/tetrafluoroethylene-based copolymer. Hereinafter, sometimes, ethylene is called as "E", tetrafluoroethylene is called as "TFE", hexafluoropropylene is called as "HFP", ethylene/tetrafluoroethylene is called as E/TFE-based copolymer, and therefore ethylene/tetrafluoroethylene/hexafluoropropylene-based copolymer is called as "E/TFE/HFP-based copolymer".

In order to improve stress cracking resistance or maintain good productivity of the fluororesin, a further comonomer represented by $CH_2$=CH-Rf (Rf represents perfluoroalkyl group having from 2 to 6 carbon atoms, particularly preferably 4 carbon atoms) is preferably copolymerized in E/TFE-based copolymer or E/TFE/HFP-based copolymer.

A method of introducing polar functional groups into the fluororesin includes a method of copolymerizing fluorine-containing vinyl monomer and vinyl monomer having polar functional group while producing fluororesin by polymerizing fluorine-containing vinyl monomer such as TFE and HFP; a method of introducing polar functional group into polymer terminal by polymerizing fluorine-containing vinyl monomer in the presence of polymerization initiator having polar functional group or chain transfer agent; a method of mixing vinyl monomer having polar functional group with fluororesin and then irradiating; and a method of graft polymerizing a comonomer having polar functional group to fluororesin by mixing vinyl monomer having polar functional group with fluororesin in the presence of radical initiator and then extruding. Of these methods, a method of copolymerizing fluorine-containing vinyl monomer with comonomer having polar functional group such as itaconic anhydride or citraconic anhydride, which is described in JP2004-238405, is preferred.

Examples of the vinyl monomer having polar functional group include monomer serving a carboxylic anhydride group such as maleic anhydride, itaconic anhydride, citraconic anhydride, 5-norbornene-2,3-dicarboxylic anhydride (also called bicyclo[2.2.1]hept-2-ene-5,6-dicarboxylic anhydride); a monomer serving a carboxyl group such as acrylic acid, methacrylic acid, maleic acid, fumaric acid, itaconic acid, citraconic acid, crotonic acid, bicyclo[2.2.1]hept-2-ene-5,6-dicarboxylic acid, $CF_2=CFOCF_2CF_2CF_2COOH$, $CF_2=CFOCF_2CF(CF_3)OCF_2CF_2COOH$, and $CH_2=CHCF_2CF_2CF_2COOH$, or alkyl ester such as methyl ester, ethyl ester, or alkaline metal salt, or ammonium salt.

Examples of the polymerization initiator having polar functional group include peroxide such as peroxide having peroxycarbonate group and peroxide having peroxyester. Among them, peroxide having peroxycarbonate group is preferably used. Examples of the peroxide having peroxycarbonate group include diisopropyl peroxy carbonate, di-n-propyl peroxydicarbonate, t-butyl peroxy isopropyl carbonate, bis (4-t-butylcyclohexyl)peroxy dicarbonate, di-2-ethylhexyl peroxydicarbonate, and so on.

Examples of the chain transfer agent having polar functional group include alcohol such as methanol, ethanol, propanol, and butanol; carboxylic acid such as acetic anhydride; thioglycolic acid, thioglycol, and so on.

The content of the polar functional group in the component (B) (polar functional group-containing fluororesin), which is calculated by the formula, (number of moles of polar functional group / number of moles of constituent monomer of fluororesin)$\times$100, is in the range of preferably 0.01 to 10 mol%, more preferably 0.05 to 5 mol%, most preferably 0.1 to 3 mol%. If the content of the functional group is too low, the affinity to side chain 1,2-diol-containing vinyl alcohol-based resin as the component (A) is significantly lowered, which discourages the component (B) against fine dispersion. As a result, it becomes difficult to obtain uniform resin composition. This means that it is hard to form sea-island structure in which the component (B) is fine island, and to give a sufficiently improved flex crack resistance. To make matters worse, void or agglutinate is generated to impair gas-barrier property or melt-molding property inherent in side chain 1,2-diol-containing vinyl alcohol-based resin.

The polar functional group-containing fluororesin used in the present invention has preferably a melting point of 120 to 240 °C, more preferably 150 to 210 °C, further more preferably 170 to 190 °C. In the case that the polar functional group-containing fluororesin has a melting point higher than the component (A) as a main component in the resin composition, preparation of a resin composition needs a temperature as high as from 250 to 290 °C, which is unfavorable because such a high temperature would deteriorate quality or color tone of side chain 1,2-diol-containing vinyl alcohol-based resin. In general, a polar functional group-containing fluororesin having the above-mentioned range of content of polar functional group has the above-mentioned range of the melting point.

Volume flow rate (hereinafter called as "Q value") of the fluororesin used as the component (B), is in the range of 0.1 to 1000 $mm^3$/s, preferably 1 to 500 $mm^3$/s, further preferably 2 to 200 $mm^3$/s. The Q value is an indicator showing melt flowability, which is a considerable factor in melt-molding fluororesin. Since the Q value is also a rough standard of molecular weight, a large Q value means low molecular weight, and small Q value means high molecular weight. The Q value is a measured using a flow tester from Shimadzu Corporation as an extrusion rate when extruding into orifice having 2.1 mm in diameter and 8 mm in length under a load of 7 kg at a temperature 50 °C higher than the melting point of the fluororesin. Unduly low Q value makes difficult in extrusion molding of the fluororesin, and unduly high Q value lowers mechanical strength.

The producing method of the above-mentioned polar functional group-containing fluororesin (B) is not limited to, but usually employs a method of feeding fluorine-containing vinyl monomer, and other comonomer into a reactor and

copolymerizing them in the presence of a radical polymerization initiator and a chain transfer agent. Any known polymerization processes including bulk polymerization, solution polymerization using organic solvent such as fluorohydrocarbon, chlorohydrocarbon, fluorinated chlorinated hydrocarbons, alcohol, or hydrocarbon for a polymerization medium; suspension polymerization using aqueous medium and optionally an organic solvent as a polymerization medium; emulsion polymerization using emulsifier and aqueous medium for a polymerization medium, may be employed. Of these, a solution polymerization is most preferable. Polymerization processes may be conducted in a single vessel- or multi vessel-type stirring-type polymerization apparatus, tubular polymerization apparatus, or the like, and in batch system or continuous system operation.

As the radical polymerization initiator, an initiator having a half-life of 10 hours at a temperature of 0 to 100 °C, preferably 20 to 90 °C is preferably used. Examples of the radical polymerization initiator include azo compound such as azobisisobutyronitrile; peroxydicarbonate such as diisopropyl peroxydicarbonate; peroxyester such as tert-butyl peroxypivalate, tert-butyl peroxyisobutyrate, and tert-butyl peroxyacetate; non-fluorinated diacyl peroxide such as isobutyryl peroxide, octanoyl peroxide, benzoyl peroxide, and lauroyl peroxide; fluorinated diacyl peroxide such as $(Z(CF_2)_pCOO)_2$ wherein Z is hydrogen, fluorine or chlorine and p is an integer of 1 to 10; inorganic peroxide such as potassium persulfate, sodium persulfate, and ammonium persulfate.

As mentioned above, organic solvent such as fluorohydrocarbon, chlorohydrocarbon, fluorinated chlorinated hydrocarbons, alcohol, and hydrocarbon, or aqueous medium is used for the polymerization medium.

As the chain transfer agent, alcohol such as methanol and ethanol; chlorofluorohydrocarbon such as 1,3-dichloro-1,1,2,2,3-pentafluoropropane and 1,1-dichloro-1-fluoroethane; hydrocarbon such as pentane, hexane, and cyclohexane; fluorinated hydrocarbon such as 1-hydrotridecafluorohexane may be used.

Under a typical polymerization condition, for example, a polymerization temperature of preferably 0 to 100 °C, more preferably 20 to 90 °C, polymerization pressure of preferably 0.1 to 10 MPa, more preferably 0.5 to 3 MPa, and polymerization time of preferably 1 to 30 hours, more preferably 2 to 10 hours, depending on the polymerization temperature, polymerization pressure, and so on are employed, but not particularly limited thereto.

[(C) other additives]

Besides (A) side chain 1,2-diol-containing vinyl alcohol-based resin and (B) polar functional group-containing fluororesin, the resin composition for gas-barrier layer used in the invention may optionally contain any known additives in an amount of not imparing the effect of the invention (for example 5 % or less based on the weight of the resin composition). The known additives include polyamide resin such as nylon 11, nylon 12, nylon 6, nylon 66, and nylon 6·66; unmodified vinyl alcohol-based resin without a structural unit shown in the above general formula (1); other thermoplastic resin; plasticizer including aliphatic polyalcohol such as ethylene glycol, glycerin and hexanediol; lubricant such as saturated aliphatic amide (e.g. stearamide), unsaturated fatty acid amide (e.g. amide oleate), bis-fatty acid amide (e.g. ethylene bis stearamide), and low molecular weight polyolefin (e.g. low molecular weight polyethylene having a molecular weight of 500 to 10000 or low molecular weight polypropylene); antiblocking agent; antioxidant; colorant; antistatic agent; ultraviolet absorber; insecticide; insoluble inorganic salt (e.g. hydrotalcite); filler (e.g. inorganic filler); oxygen scavenger (e.g. ring-opened polymer of cycloalkenes such as polyoctenylene or cyclized product of polymer of conjugated diene such as butadiene); surfactant, wax; dispersing agent (stearic acid monoglyceride), thermal stabilizer, light stabilizer, drying agent, fire retardant, crosslinking agent, curing agent, foaming agent, crystal forming agent, antifogging agent, biodegradable agent, silane coupling agent, conjugated polyene compound, and the like known additive.

Further, a saponified monomer or an unpolymerized monomer unavoidably contained in (A) side chain 1,2-diol-containing vinyl alcohol-based resin or (B) polar functional group-containing fluororesin may also be contained in the resin composition.

An unavoidable impurity contained in the (A) side chain 1,2-diol-containing vinyl alcohol-based resin includes, for example, 3,4-diacetoxy-1-butene, 3,4-diol-1-butene, 3,4-diacetoxy-1-butene, 3-acetoxy-4-ol-1-butene, 4-acetoxy-3-ol-1-butene, and so on.

[Resin composition for gas-barrier layer and preparation thereof]

A resin composition for gas-barrier layer can be prepared by blending (A) side chain 1,2-diol-containing vinyl alcohol-based resin, (B) polar group-containing fluororesin, and an optionally added (C) additives according to the necessity in a predetermined ratio and thereafter melt-kneading.

The weight ratio (A/B) of (A) side chain 1,2-diol-containing vinyl alcohol-based resin to (B) polar functional group-containing fluororesin is in the range of preferably 9.5/0.5 to 5/5, more preferably 9/1 to 6/4, particularly preferably 9/1 to 7/3. Unduly high content of the component (A) tends to become insufficient in improvement of flexibility and flex crack resistance. Unduly high content of the component (B) tends to become insufficient in hydrogen gas-barrier property. Particularly, in the case that polar functional group-containing fluororesin (B) has a carboxyl group as the polar group,

it is preferred to add a variety of salt (e.g. sodium acetate, potassium acetate, or dipotassium hydrogenphosphate) for the purpose of promoting a reaction between hydroxyl group and carboxyl group as well as improving their compatibility.

For melt-kneading, extruder, banbury mixer, kneader-ruder, mixing roll, plastmill, and a like known kneading machine may be used. In the case of extruder, a single spindle or double spindles extruder may be used. After melt-kneading, resin composition is extruded in a strand, and the strand is cut to be pelletized.

(A) side chain 1,2-diol-containing vinyl alcohol-based resin and (B) polar functional group-containing fluororesin may be fed at a time and then melt-kneaded, alternatively, (B) polar functional group-containing fluororesin in melted or solid state may be sideways fed while melt-kneading the (A) side chain 1,2-diol-containing vinyl alcohol-based resin with use of a twin screw extruder.

The melt-kneading temperature is selected appropriately depending on the kinds of (A) side chain 1,2-diol-containing vinyl alcohol-based resin and (B) polar functional group-containing fluororesin, usually in the range of 215 to 250 °C, preferably 215 to 240 °C, more preferably 220 to 235 °C, particularly preferably 220 to 230 °C.

The resin composition for gas-barrier layer having the above-mentioned composition can form a polymer alloy having sea-island structure in which islands of (B) polar functional group-containing fluororesin in the matrix of (A) side chain 1,2-diol-containing vinyl alcohol-based resin as the primary component. Since the polar functional group of the component (B) is capable of reacting with or forming hydrogen bond(s) with the hydroxyl group of the component (A), the interface bonding in the sea-island structure is strengthened. Furthermore, the average area of the islands in the sea-island structure of the resin composition for gas-barrier layer is in the range of usually 0.1 to 3 μm, preferably 1.5 μm or less, more preferably 1.3 μm or less, most preferably 1 μm or less.

Such resin composition for gas-barrier layer exhibits excellent hydrogen gas-barrier property based on a constituent side chain 1,2-diol-containing vinyl alcohol-based resin (A), while flex crack resistance as a weak point of vinyl alcohol-based resin is improved by the polar functional group-containing fluororesin (B). Furthermore, the resin composition for gas-barrier layer has excellent hydrogen brittleness resistance. For instance, the gas-barrier layer of the resin composition has such excellent high-pressure hydrogen durability that no blister is generated in hydrogen exposure cycles conducted by repeating supply and removal of hydrogen gas as high as 70 MPa. Although a detail of the mechanism or construction cannot be explained, it is supposed as follows: in addition to poor hydrogen solubility of both constituents of the resin composition, i.e. side chain 1,2-diol-containing vinyl alcohol-based resin and polar functional group-containing fluororesin, interface affinity in the sea-island structure of the side chain 1,2-diol-containing vinyl alcohol-based resin and the polar functional group-containing fluororesin is remarkably enhanced by a resultant compatibilizer produced by a chemical reaction between them, as a result, the resin composition would be given a toughness sufficient for resisting a load derived from dissolution or diffusion of hydrogen gas. If interface affinity in the sea-island structure is low, the interface bonding would be destroyed by high-pressure hydrogen exposure, resulting in allowing hydrogen to penetrate therein and to discharge therefrom when degassed, which causes generation of blister. However, enhanced interface affinity would suppress the generation of the blister caused by vaporization of hydrogen dissolved in the island portion when degassed after the exposure to high-pressure hydrogen gas.

Moreover, in a tension test conducted after the hydrogen brittleness test, a gas barrier layer of the resin composition proved that the tension strength was still maintained after the hydrogen brittleness test. This test result is supposed that decrease of mechanical strength resulting from the repeated hydrogen exposure might be suppressed by inhibiting penetration of hydrogen gas.

The resin composition for gas-barrier can exhibit excellent gas-barrier property against hydrogen gas as well as other gases such as helium, oxygen, nitrogen, and air. In particular, the resin composition exhibits excellent barrier property against gas having a molecular weight less than 10 such as hydrogen and helium.

< high-pressure gas hose or storage vessel>

A high-pressure gas hose or storage vessel of the present invention comprises at least one gas-barrier layer made of the above-mentioned resin composition. The gas barrier layer is preferably an inner layer to be contacted with high-pressure gas or intermediate layer, more preferably intermediate layer in a multilayer hose or storage vessel. Furthermore, a multilayer hose or storage vessel preferably have a water resistant and moisture-impermeable thermoplastic resin layer as an inner layer and/or outer layer exposed to ambient air. The intermediate layer is a layer interposed between the outer layer and inner layer. More preferably, the outer layer is further covered with a reinforcing layer which becomes the outermost layer exposed to ambient environment. Moreover, an adhesive layer made of adhesive resin may be interposed between these layers.

Accordingly, the laminated structure for the high-pressure gas hose or storage vessel includes layer arrangements, for example, gas-barrier layer of the inventive resin composition/moisture-impermeable thermoplastic resin layer/reinforcing layer, moisture-impermeable thermoplastic resin layer/said gas-barrier layer/reinforcing layer, moisture-impermeable thermoplastic resin layer/said gas-barrier layer/moisture-impermeable thermoplastic resin layer/reinforcing layer, which are in order from the inside to outside. A preferable layer arrangement of the laminated structure is moisture-impermeable thermoplastic resin layer/said gas-barrier layer/moisture-impermeable thermoplastic resin layer/reinforcing layer. An adhesive layer may be interposed between the layers of a multilayer hose or storage vessel. The number of total layers including a reinforcing layer is in the range of usually 3 to 15, preferably 4 to 10.

The thickness of the moisture-impermeable thermoplastic resin layer is usually larger than that of the gas-barrier layer, on the proviso that the thickness is sum of thicknesses of the same kind layers. The ratio in thickness of the moisture-impermeable thermoplastic resin layer to the gas-barrier layer (moisture-impermeable thermoplastic resin layer/gas-barrier layer) is in the range of usually 1 to 100, preferably 3 to 20, particularly preferably 6 to 15. The thickness of the moisture-impermeable thermoplastic resin layers is usually from 50 to 150 μm.

Unduly thin gas-barrier layer makes difficult to obtain excellent gas-barrier property of the resulting hose or storage vessel, and unduly thick gas barrier layer tends to lower flex crack resistance and economics.

Also, unduly thin moisture-impermeable thermoplastic resin layer tends to lower strength of the resulting hose or storage vessel, and unduly thick moisture-impermeable thermoplastic resin layer tends to lower flex crack resistance or flexibility.

Furthermore, it is preferable to thicken a gas-barrier layer in a general multilayer structure containing an adhesive layer. The ratio of thicknesses of the gas-barrier layer to the adhesive layer, i.e. gas-barrier layer/adhesive layer is usually from 1 to 100, preferably from 1 to 50, particularly preferably from 1 to 10. A general adhesive layer has a thickness of preferably 10 to 50 μm. Unduly thin adhesive layer sometimes becomes insufficient in adhesiveness between layers, and unduly thick adhesive layer tends to lower economics.

The thermoplastic resin used for the moisture-impermeable thermoplastic resin layer is preferably hydrophobicity thermoplastic resin. Examples of the hydrophobicity thermoplastic resin include broad meaning polyolefin-based resin such as polyethylene-based resin including linear low density polyethylene (LLDPE), low density polyethylene (LDPE), medium density polyethylene (MDPE), and high density polyethylene (HDPE); ethylene-vinyl acetate copolymer, ionomer, ethylene-propylene copolymer, ethylene-α-olefin (α-olefin having from 4 to 20 carbon atoms) copolymer, ethylene-acrylic acid ester copolymer; polypropylene-based resin such as polypropylene and propylene-α-olefin (α-olefin having from 4 to 20 carbon atoms); olefin homo- or copolymer such as polybutene and polypentene; cyclic polyolefin; or graft modified polymer of these olefin homo- or copolymer modified with unsaturated carboxylic acid or its ester such as carboxylic acid-modified polyolefin-based resin and ester modified polyolefin-based resin. Also the hydrophobicity thermoplastic resin include polystyrene; polyamide-based resin including polyamide such as nylon 11, nylon 12, nylon 6, nylon 66, and copolyamide such as nylon 6·12, and nylon 6·66; polyvinyl chloride, polyvinylidene chloride, acryl, vinyl ester-based resin, polyvinyl acetate, polyurethane-based resin, fluorine-based resin such as tetrafluoroethylene, tetrafluoroethylene/perfluoro (alkyl vinyl ether) copolymer, ethylene/tetrafluoroethylene copolymer, and tetrafluoroethylene/hexafluoropropylene copolymer; chlorinated polyethylene, chlorinated polypropylene, fluorine having polar group thermoplastic resin, and the like thermoplastic resin.

Among them, at least one selected from the group consisting of polyolefin-based resin, polyamide-based resin, and fluorine having polar group-based resin is preferable in view of water resistance, strength, toughness, and durability under low temperatures, and at least one selected from the group consisting of carboxylic acid-modified polyolefin-based resin, polyamide-based resin, and fluorine having polar group-based resin is more preferable. Epoxy resin may be coated over the outside the moisture-impermeable thermoplastic resin layer.

A known adhesive resin may be used for the adhesive layer, in general, carboxylic acid-modified polyolefin-based resin which is polyolefin-based resin modified with unsaturated carboxylic acid such as maleic acid or unsaturated carboxylic anhydride, and fluororesin having polar group is preferably used for adhesive resin. The polyolefin-based resin listed as the thermoplastic resin used for the moisture-impermeable thermoplastic resin layer may also be employed for the above polyolefin-based resin for the adhesive resin.

The same or different type of polar functional group-containing fluororesin used for the resin composition for gas-barrier layer may be used for the fluororesin having polar group. The above-mentioned carboxylic acid-modified polyolefin-based resin is preferable, and the carboxylic acid-modified polypropylene-based resin or the carboxylic acid-modified polyethylene-based resin or the mixture of them is more preferable, from the viewpoint of the balance between economics and performance.

The moisture-impermeable thermoplastic resin layer or adhesive layer may contain a variety of conventionally known additives, modifier, filler, or another resin in an amount not inhibiting the effect of the invention, in order to improve mold processability or some physical properties.

Further, since the resin composition for gas-barrier layer used in the present invention exhibits adhesiveness to PVA resin and EVOH resin, an PVA resin or EVOH resin may be used as the above moisture-impermeable thermoplastic resin layer in some special cases. Examples of employed layer arrangements are polyamide resin layer/EVOH resin layer/gas-barrier layer, or polyamide resin layer/EVOH resin layer/gas-barrier layer/EVOH resin. In these layer arrangements, copolyamide, particularly nylon 6·66 is preferably used for the polyamide resin.

Any of fiber reinforced fabric or reinforced rubber sheet may be used for the reinforcing layer. The fiber reinforced fabric, non-woven fabric, or filaments may contain high strength fibers such as poly-p-phenylene benzbisoxazole (PBO)

fibers, aramid fibers, and carbon fibers, preferably filaments employing high strength fibers. In particular, a preferable reinforcing layer may be formed by wrapping high strength fibers in spiral form or formed from a sheet made by knitting high strength fibers.

The reinforcing layer of a hose may be formed according to the disclosure in JP2010-31993A. Poly-p-phenylene benzbisoxazole (PBO) fiber is preferably used for a reinforcing layer of the hose, and carbon fiber is preferably used for a reinforcing layer of a storage vessel.

In the case that the hose or storage vessel of the present invention is a multilayer hose or storage vessel containing at least one gas-barrier layer made from the resin composition, the material of each layer of the multilayer structures has a similar average linear expansion coefficient from one another. The ratio of average linear expansion coefficient of a constituent layer to the gas-barrier layer, i.e. material of a constituent layer/resin composition for gas-barrier layer, is usually 2 or less, preferably from 0.8 to 1.8, particularly preferably from 1 to 1.8. The ratio of average linear expansion coefficient of the adjacent layer to the gas-barrier layer, i.e. material of the adjacent layer/resin composition for gas-barrier layer, is also preferably in the above-mentioned range, particularly preferably the ratio of the outermost layer to the gas-barrier layer, i.e. outermost layer material/resin composition for gas-barrier layer is in the above-mentioned range.

If the ratio of the average linear expansion coefficient becomes closer to 1, each layer is capable of exhibiting similar behavior against the environmental change including hydrogen exposure cycles. Since the gas-barrier layer is able to follow the behavior of other layers, an applied load by flexing and so on to the gas-barrier layer could be reduced.

An average linear expansion coefficient measured under the same condition may be adopted as the ratio of the average linear expansion coefficient. It is preferable to adopt an average linear expansion coefficient at a temperature of -60 to 40 °C, which is the practical temperature range for an equipment for high-pressure gas.

In particular, in the case of comprising such a reinforcing layer composed of a sheet layer or the sheet made by knitting high strength fiber or formed by wrapping the fiber in spiral form, a combination of the layer materials is appropriately chosen with taking into consideration the linear expansion coefficient of the reinforcing layer, the average linear expansion coefficient may be measured with use of Thermo mechanical Analyzer (TMA).

The inner diameter, outer diameter, thickness, or length of the hose may be selected depending on the applicability. In general, the inner diameter is in the range of usually 1 to 180 mm, preferably 3 to 100 mm, particularly preferably 4.5 to 50 mm, especially preferably 5 to 12 mm. The outer diameter is in the range of usually from 5 to 200 mm, preferably 7 to 100 mm, particularly preferably 9 to 50 mm, especially preferably 10 to 15 mm. The thickness is in the range of usually 1 to 50 mm, preferably 1 to 20 mm, particularly preferably 1 to 10 mm. The length is in the range of usually 0.5 to 300 m, preferably 1 to 200 m, particularly preferably 3 to 100 m.

The thickness and size of the storage vessel may be selected depending on applicability. In general, the thickness is in the range of usually 1 to 100 mm, preferably 3 to 80 mm, particularly preferably 3 to 50 mm. The volume of the storage vessel is in the range of usually 5 to 500L, preferably 10 to 450L, particularly preferably 50 to 400L, but not limited thereto. The shape of the storage vessel may be cylindrical, prism shaped, barrel-shaped or other adequate shape.

The thickness of the gas-barrier layer is selected from the range of usually 5 to 60 %, particularly 8 to 45 %, based on the thickness of the hose or storage vessel.

The high-pressure gas hose or storage vessel of the present invention has a gas-barrier layer having not only excellent hydrogen barrier property, but also flexibility regardless that vinyl alcohol-based resin lacks flexibility. Furthermore, the high-pressure gas hose or storage vessel is resist to hydrogen embrittlement and thereby maintaining its initial mechanical strength for long term. Moreover, since blister generation is suppressed even if a multilayer hose or storage vessel is subjected to pressure-depressure cycles with high pressure hydrogen gas, a multilayer hose or storage vessel can be prevented from reducing the adhesive strength of the interface between the gas-barrier layer and its adjacent layer (e.g. reinforcing layer or moisture-impermeable thermoplastic resin layer). Accordingly the high-pressure gas hose or storage vessel of the invention may be preferably used as a high-pressure hydrogen supply hose at a hydrogen gas station, a storage vessel such as Type IV storage vessel, and hydrogen gas fuel storage vessel or hose, which are required for excellent durability against hydrogen embrittlement resulted from repeated exposure by pressure-depressure cycles with hydrogen gas having usually 35 to 90 MPa, preferably 50 to 90 MPa.

In particular, in the case of employing (A") side chain 1,2-diol-containing EVOH resin for the component (A), the resulting gas barrier layer is significantly excellent in flex crack resistance and can make its linear expansion coefficient closer to that of nylon 11, nylon 12, or polyolefin-based resin, as compared with the case of employing (A') side chain 1,2-diol-containing PVA resin for the component (A). Accordingly, in the case of use subjected to frequent flexion, (A") side chain 1,2-diol-containing EVOH resin is preferably employed.

On the other hand, in the case of employing (A') side chain 1,2-diol-containing PVA resin for the component (A), the resulting gas barrier layer can exhibit good gas-barrier property, especially low hydrogen dissolution amount, and is advantageous in terms of easily making its linear expansion coefficient closer to that of carbon fiber by employing a reinforcing layer containing carbon fiber, as compared with the case of employing (A") side chain 1,2-diol-containing

EVOH resin for the component (A). Accordingly, in the case of being exposed to high-pressure gas including hydrogen gas for long term like a high-pressure gas storage vessel, (A') side chain 1,2-diol-containing PVA resin is more preferably employed.

The above description has been mainly described about hydrogen gas, however, according to the invention, the objective gas with respect to gas-barrier property of the gas-barrier layer is not limited to high-pressure hydrogen gas. The gas supply hose or storage vessel of the invention may be preferably used for high-pressure gas such as helium, nitrogen, oxygen, and air, besides hydrogen. It is difficult for a conventional material to satisfy both good gas-barrier property and high mechanical strength such as flex crack resistance with respect to gas, particularly, gas having molecular weight of 10 or less, however, the gas-barrier layer of the invention can satisfy the both.

## EXAMPLES

Hereinafter, the present invention is described specifically by way of Examples, but the present invention is not intended to be limited to the description of the following examples. Incidentally, "parts" in examples means the weight basis unless otherwise indicated.

[Measurement Evaluation Method]

First, measurement evaluation method employed in the following examples, will be explained.

(1) average polymerization degree

It is measured in accordance with JIS K6726.

(2) content of side chain 1,2-diol structural unit (1a)

It is calculated based on the integrated value measured with $^{1}$H-NMR (300 MHz proton NMR, d6-DMSO solution, internal standard material: tetramethylsilane).

(3) saponification degree

It is calculated based on alkali consumption in hydrolysis of remaining unsaponified vinyl acetate monomer and 3,4-diacetoxy-1-butene monomer.

(4) melt viscosity

The melt viscosity at 220 °C with shear rate 122 $sec^{-1}$ is measured using "Capirograph 1B" made by TOYO SEIKI Co., Ltd..

(5) hydrogen permeation coefficient

A film test piece 300 $\mu$m in thickness was set at the sample position in the apparatus for measuring hydrogen permeation degree shown in Fig. 1, a pressurized hydrogen gas having hydrogen pressure of 0.5 MPa or 0.9 MPa was supplied to the film test piece in an atmosphere of 41 °C. The hydrogen permeated through the film test piece was collected and the permeation coefficient (cc· 20 $\mu m/m^2$·day·atm) was measured.

In Fig. 1, TI represents Temperature Indicator, PI represents Pressure Indicator, MFC represents Mass Flow Controller.

(6) amount of hydrogen dissolution (ppm)

After exposing a test piece 13 mm in diameter and 3 mm in thickness to hydrogen gas of 70 MP at 60 °C for 24 hours, the test piece was set in the Thermal Desorption Gas Analysis (TDA) with maintaining a constant temperature and temporal change in discharge amount of hydrogen was measured with gas chromatography. The amount of hydrogen dissolution was determined by approximation solution in data fitting with least-square method in the following diffusion equation where the saturated hydrogen amount and diffusion coefficient D are unknown constant number in polynominal equation.

[equation 1]

$$C_{H,R}(t)=\frac{32}{\pi^2}\times C_{H0}\times\left\{\sum_{n=0}^{\infty}\frac{\exp[-(2n+1)^2\pi^2Dt/\ell^2]}{(2n+1)^2}\right\}\times\left\{\sum_{n=0}^{\infty}\frac{\exp[-D\beta_n{}^2t/\rho^2]}{\beta_n{}^2}\right\}$$

In the formula, $C_{H,R(t)}$ (wt·ppm) represents the hydrogen amount in the test piece at the time t (sec) after a lapse of time for reduced pressure after hydrogen exposure, $C_{H0}$ (wt·ppm) represents a saturation hydrogen amount under the hydrogen exposure, D ($m^2$/sec) represents diffusion coefficient, $\beta$n represents a root of 0 order Bessel function, 1 (m) and p (m) represent thickness and radius of each test piece respectively. Japan Society of Mechanical Engineers collection of papers A edit., volume 75, 756, pp. 1063-1073 may be referred for this method for reference.

(7) flex crack resistance

A torsion test was performed with Gelbo Flex-tester (Rigaku Kogyo) under the condition of 23 °C and 50 %RH with respect to a given dry film. The test was set up such that a horizontal motion of 25 inch was followed by a twisting motion of 440° in 3.5 inch stroke for 100 times (40 cycles/minute). After performing the test, the number of pinholes generated in the central part having an area of 28 cm× 17 cm of the film was counted. Such process was repeated for 5 times and the average value was calculated.

(8) hydrogen brittleness (durability)

(8-1) presence or absence of blister after high-pressure hydrogen gas exposure cycles

A dumbbell-shaped test piece having sizes according to ISO 527-3 (b1=6, b2=25, $L_0$=25, $l_1$=33 L=80, $l_3$=115, h=1, all units are mm) shown in Fig. 2 was set at the position indicated by "test sample" and subjected to high-pressure hydrogen gas exposure cycles using the hydrogen high-pressure gas equipment shown in Fig. 3. The exposure cycles was performed for 20 cycles (total exposure time 400 hours). The exposure cycle is performed according to a pressure pattern as shown in Fig. 4, where hydrogen gas pressure is risen up to 70 MPa over 0.5 hours, maintained at the high-pressure for 20 hours, and thereafter reduced in 30 seconds, followed by standing for 0.5 hours.

After the high-pressure hydrogen gas exposure cycles, the test piece was retrieved, the dumbbell portion of the test piece, where blister is easy to be generated, was visually checked about presence or absence of blister. The check results were classified based on the following criterion:

"○": absence of blister at a dumbbell portion, i.e. blister number being 0,
"Δ": the number of the blister being from 50 or more to less than 300, and
"×": the number of the blister being 300 or more.

(8-2) reduction of mechanical strength by the high-pressure hydrogen gas exposure cycles

After the high-pressure hydrogen gas exposure cycles, a tensile test was performed. The tensile test results were classified according to the following criterion based on the reduced rate in modulus of elasticity and breaking extension (%) after the test relative to those before the test:

"○": the reduced rate being 10 % or less, and no hydrogen embrittlement resulting in cracking; and
"×": the reduced rate being excess 10 %, or hydrogen embrittlement resulting in cracking being occurred.

(9) Observation of Morphology (domain size: $\mu$m)

Resin pellets (Nos. 4, 5, 7, and 13) produced by the method described below were embedded with epoxy resin, and cut with ultra-cryomicrotome. The cut surface was subjected to ion etching and conductive treatment using Os coater, and thereafter the average size of the domain was calculated based on the observation by the scanning electron microscope (10000 magnification).

(10) average hydrogen permeation rate (cc/m·hr)

A hose having inside diameter of 8.3 mm and outside diameter of 10.3 mm was produced by extrusion molding. 70 MPa of hydrogen were transported through the extruded hose for 1000 hours, and the hydrogen amount leaked was measured outside the hose and converted into hydrogen permeation amount per one hour (cc/m·hr) in the same thickness.

(11) high-pressure hydrogen gas exposure cycles of multilayer hose

A hose test sample was set at any one of the attachment position Nos. 1 to 8 in the high-pressure hydrogen equipment as shown in Fig. 5 and subjected to hydrogen gas exposure cycles. The hydrogen gas exposure cycles were performed for 2200 cycles at -20 °C. The hydrogen gas exposure cycle was performed in a manner such that hydrogen gas having a temperature of -30 °C was supplied in the hose test sample according to a given pressure pattern, where the pressure of hydrogen gas was risen up from 0.6 MPa to 70 MPa over 180 seconds, maintained at 70 MPa for 2 seconds, and reduced to 0.6 MPa over 8 seconds, followed by standing at 0.6 MPa for 170 seconds. Any hose test sample had an average surface temperature of -22 to -11 °C regardless of the set position of the test sample.

In Fig. 5, NV represents a needle valve, and SV represents a stop valve.

Test samples after high-pressure hydrogen gas exposure cycles were retrieved and cut. The inner surface of the cut sample was visually checked, and evaluated according to the criterion:

"×": the gas-barrier layer being broken;
"Δ": folded scar being observed in the gas-barrier layer but not broken; and
"○": no folded scar in the gas-barrier layer.

(12) linear expansion coefficient (α)

The test was performed with a minute constant load thermal expansion meter (Rigaku) under the condition of temperature elevation rate of 10 °C/min, load of 10 g, and probe of 5 mmφ, and a linear expansion coefficient ($10^{-5}$/ °C) was calculated using the measurement results.

[preparation of resins used in examples]

(1) side chain 1,2-diol-containing PVA resins 1, 2, and 3

Into a reaction vessel with reflux condenser and stirrer, 68.0 parts of vinyl acetate, 23.8 parts of methanol, and 8.2 parts of 3,4-diacetoxy-butene were fed, and azobisisobutyronitrile was added in the content of 0.3 mol% relative to the amount of the vinyl acetate. The vessel was heated up with stirring under nitrogen flow, and thereby polymerization was initiated. When the rate of polymerization of the vinyl acetate arrived at 90 %, the polymerization reaction was terminated by addition of m-dinitrobenzene, and subsequently, unreacted acetic acid vinyl monomer was removed outside the system by blowing methanol vapor to the system to obtain a methanol solution of the resulting copolymer.

Then, the obtained methanol solution was diluted with methanol to adjust to the concentration of 45 %, and thereafter was thrown into kneader. 2 % methanol solution of sodium hydroxide was added in an amount of 11.5 mmol relative to 1 mol in sum of vinyl acetate structural unit and 3,4-diacetoxy-1-butene structural unit in the copolymer to saponify the copolymer under maintaining the solution temperature of 35 °C.

A saponified product was precipitated with proceeding the saponification, filtration was conducted when the particle-like saponified product was generated. The filtrated saponified product was washed with methanol, and dried with hot air dryer, and thereby obtaining PVA2 which is PVA having side chain 1,2-diol structural unit represented by the above formula (1a).

Thus prepared side chain 1,2-diol-containing PVA resin has a saponification degree of 99.9 mol%, average polymerization degree of 470, and content of 1,2-diol structural unit represented by the formula (1a) of 6 mol%.

Polyvinyl alcohols (PVA1 and PVA3) both having polymerization degree of 470 but different content of side chain 1,2-diol structural unit from each other were prepared by changing the added amount of 3,4-diacetoxy-1-butene.

(2) side chain 1,2-diol-containing EVOH resin

Into a 1 $m^3$-polymerization vessel with cooling coil, 500 parts of vinyl acetate, 80 parts of methanol, 250ppm (relative to vinyl acetate) of acetyl peroxide, 30ppm (relative to vinyl acetate) of citric acid, and 13 parts of 3,4-diacetoxy-1-butene were fed, and air in the vessel was replaced with nitrogen gas. Thereafter ethylene replacement was conducted in the vessel, and ethylene was continued to feed until the ethylene pressure reached to 42 $kg/cm^2$. The reaction system

was heated up to 67 °C and copolymerized with stirring for 6 hours until the rate of polymerization reached to 60%.

Thereafter, polymerization reaction was terminated and thereby obtaining ethylene-vinyl acetate-diacetoxy butene terpolymer having ethylene content of 32 mol% and polymerization degree of 450. Next, the resulting solution of ethylene-vinyl acetate-diacetoxy butene terpolymer was thrown into a distillation tower and unreacted vinyl acetate was removed by feeding methanol vapor from the bottom of the tower, and resulting in obtaining a methanol solution of ethylene-vinyl acetate-diacetoxy butene terpolymer.

Into the methanol solution of the ethylene-vinyl acetate-diacetoxy butene terpolymer, a methanol solution containing sodium hydroxide in 0.008 equivalent relative to the acetic acid group residue of the ethylene-vinyl acetate-diacetoxy butene terpolymer was fed to saponify the ethylene-vinyl acetate-diacetoxy butene terpolymer. Thus methanol solution of EVOH resin (EVOH resin 30 % and methanol 70 %) having 1.0 mol% of 1,2-diol structural unit represented by the general formula (1a) was obtained. The EVOH resin has a saponification degree of acetyloxy portion of 99.8 mol%, and MFR (210 °C, load of 2160 g) of 12g/ 10 minutes in the state of dry pellet.

The obtained methanol solution of side chain 1,2-diol-containing EVOH resin was extruded in strand in cold water, the strand which was hydrous porous matter was cut to obtain a porous pellet 3.8 mm in diameter and 4 mm in length. The porous pellet contains side chain 1,2-diol-containing EVOH resin in the content of 35 %.

Thus obtained porous pellet was washed to reduce the sodium content to 0.08 parts relative to 100 parts of EVOH resin. The porous pellet was immersed for 4 hours in 500 parts of water containing 0.5 parts of acetic acid, 0.004 parts of phosphoric acid calcium (phosphorus conversion), and 0.025 parts of boric acid (boron conversion), relative to 100 parts of EVOH resin. The washed pellets was dried for 8 hours at 110 °C under nitrogen gas flow, and the pellet of EVOH resin having sodium content of 0.03 parts, phosphoric acid root of 0.0005 parts (phosphorus conversion, boric acid of 0.02 parts (boron conversion), relative to 100 parts of EVOH resin was obtained. This side chain 1,2-diol-containing EVOH resin has a degree of crystallization of 45 %, and MFR of 4.1g/10 minutes (210 °C, load of 2160 g) and 4.9g/10 minutes (220 °C, load of 2160 g).

(3) polar functional group-containing fluororesin (acid anhydride group-containing fluororesin) (B)

Into a degassed polymerization vessel having an internal volume of 430 L with stirrer, 200.7 kg of 1-hydrotridecafluorohexane and 55.8 kg of 1,3-dichloro-1,1,2,2,3-pentafluoropropane (AK225cb from ASAHI GLASS CO., LTD, hereinafter called as "AK225cb") as a solvent, and 1.3 kg of $CH_2=CH(CF_2)_4F$ as a polymerizable monomer, were fed. Next, 122.2 kg of hexafluoropropylene (HFP), 36.4 kg of tetrafluoroethylene (TFE), and 1.2 kg of ethylene (E) as polymerizable monomer were pressed into the vessel and then the polymerization system in the vessel was heated up to 66 °C. The polymerization reaction was initiated by adding 85.8g of tert-butyl peroxypivalate. In order to maintain the constant pressure in the vessel during polymerization reaction, a gaseous mixture TFE/E in molar ratio of TFE/E=54/46 was continued to feed. Also itaconic anhydride as a polar functional group-containing compound was continued to feed so that the content of itaconic anhydride becomes 1.0 mol% relative to the monomer gas mixture (TFE/E) and becomes 0.35 mol% relative to the $CH_2=CH(CF_2)_4F$. After 3.6 hours from the initiation of the polymerization reaction, the polymerization vessel was cooled down to room temperature and purged to normal pressure. The feed amount of the mixture of the monomer gases reached to 29 kg.

The solvent was removed from the resulting slurry to obtain fluororesin containing acid anhydride group as a polar functional group. The fluororesin was vacuum dried at 130 °C for 4 hours, a polar functional group-containing fluororesin (B) was yielded in 30 kg.

Thus produced polar functional group-containing fluororesin (B) has a crystallization temperature of 175 °C, Q value of 12 $mm^3/s$, and MFR (210 °C, 2160g) of 2.3g/10 minutes. The comonomer composition of the polar functional group-containing fluororesin (B) was TFE/E/HFP/$CH_2=CH(CF_2)_4F$/itaconic anhydride, and their contents were 47.83/42.85/7.97/1.00/0.35 (mol%) in order.

(4) polyamide resin

Polyamide resins used were shown below:

· nylon 11:"Rilsan BESN® P40" from Arkema Inc. having melt viscosity (220 °C, shear rate 122 $sec^{-1}$) of 1557 Pa·s
· nylon 6·66: "Novamid® 2420J" from Mitsubishi Engineering having melt viscosity (220 °C, shear rate 122 $sec^{-1}$) of 1368 Pa·s and SP value of 25.8.

(5) carboxylic acid-modified polyolefin-based resin

Polyolefin-based resins used were shown below:

· carboxylic acid-modified LLDPE: "ADMER NF518" from Mitsui Chemicals Inc. having melt viscosity (shear rate: 122 $sec^{-1}$) of 1149 Pa·s and MFR (220 °C, load of 2160g) of 3.4g/10 minutes,
· carboxylic acid-modified PP: "ADMER QF551" from Mitsui Chemicals Inc. having melt viscosity (shear rate: 122 $sec^{-1}$) of 549 Pa·s, and MFR (220 °C, load of 2160g) of 2.4g/10 minutes.

[preparation of pellet and film]

Resins and resin compositions used were pelletized with twin screw extruder (TECHNOVEL CORPORATION) under the following conditions. The resin composition was prepared by dryblending each resin and extruding with twin screw extruder.

screw diameter: 15 mm
L/D= 60 mm
direction of rotation: same direction
screw pattern: 3 kneading blocks
screen mesh: 90/90 mesh
screw rotational frequency: 200 rpm
temperature pattern: C1/C2/C3/C4/C5/C6/C7/C8/D=180/200/210/210/215/215/220/220/ 220 °C
resin temperature: 225 °C
discharge amount: 1.5 kg/hr

Film 30 μm in thickness was produced from the pellets of the prepared resin or resin composition using twin screw extruder (TECHNOVEL CORPORATION) under the following conditions:

diameter (D): 15 mm
L/D=60
screw: 3 kneading blocks
vent: C7 open
set temperature: C1/C2/C3/C4/C5/C6/C7/C8/D=180/200/210/210/215/215/220/220/220 °C screen mesh: 90/90 mesh
screw rotational frequency: 200 rpm
resin temperature: 225 °C
discharge amount: 1.5 kg/hr
die: width 300 mm, coat hanger type
take-off speed: 2.6 m/min
roll temperature: 50 °C
air gap: 1 cm

[comparison of hydrogen gas-barrier property]

Three types of PVAs which have different content of side chain 1,2-diol structural unit from one another, PVA1, PVA2, and PVA3, side chain 1,2-diol-containing EVOH resin, and nylon 11 were measured with respect to hydrogen permeation coefficient, and measurement results were shown in Table 1.

[Table 1]

| | **Content of ethylene (mol%)** | **Polymerization degree** | **Content of side chain 1,2-diol (mol%)** | **Hydrogen permeation coefficient (41 °C) (cc·20μm/m²·day·atm)** | |
|---|---|---|---|---|---|
| | | | | 0.5MPa | 0.9MPa |
| **Side chain 1,2-diol-containing PVA1** | 0 | 470 | 4.5 | 6.7 | 6.0 |
| **Side chain** | 0 | 470 | 6.0 | 5.9 | 5.2 |

(continued)

| | Content of ethylene (mol%) | Polymerization degree | Content of side chain 1,2-diol (mol%) | Hydrogen permeation coefficient (41 °C) (cc·20μm/m²·day·atm) | |
|---|---|---|---|---|---|
| | | | | 0.5MPa | 0.9MPa |
| 1,2-diol-containing PVA2 | | | | | |
| Side chain 1,2-diol-containing PVA3 | 0 | 470 | 12 | 5.3 | 5.5 |
| Side chain 1,2-diol-containing EVOH | 32 | 450 | 1.0 | 130 | 130 |
| Nylon 11 | - | - | - | $2.1 \times 10^4$ | $2.0 \times 10^4$ |

As shown in Table 1, nylon 11 had $2.1\times10^4$ cc/m²·day·atm in hydrogen permeation coefficient at 41°C and 0.5 MPa, which corresponds to 150 times or more of that of side chain 1,2-diol-containing EVOH resin and 3000 times or more of that of side chain 1,2-diol-containing PVA resins. From these result, side chain 1,2diol-containing vinyl alcohol-based resin is remarkably excellent in gas-barrier property, as compared with a thermoplastic resin whithout vinyl alcohol structural unit.

With respect to the side chain 1,2-diol-containing vinyl alcohol-based resins, it is understood that the hydrogen permeation coefficient of the side chain 1,2-diol-containing PVA resin is decreased with increase of the content of side chain 1,2-diol structural unit. Although PVA2 and PVA1 have half and one-third of the content of side chain 1,2-diol structural unit of PVA3 respectively, these hydrogen permeation coefficient were increased slightly, i.e. increased by 0.6cc/m²·day·atm and 0.7cc/m²·day·atm respectively. From these results, it is understood that any PVA is excellent in hydrogen permeation barrier.

On the other hand, side chain 1,2-diol-containing EVOH resin had 130cc/m²·day·atm of hydrogen permeation coefficient, which was 10 times or more higher, as compared with that of PVA1, PVA2, and PVA3. It is understood that the influence of the content of ethylene structural unit is larger than the influence of the content of side chain 1,2-diol structural unit on hydrogen permeation coefficient in side chain 1,2-diol-containing vinyl alcohol-based resin.

However, side chain 1,2-diol-containing EVOH resin as well as side chain 1,2-diol-containing PVA resins could be increased in hydrogen gas-barrier property by increasing the content of side chain 1,2-diol structural unit, based on the results of PVA1, PVA2, and PVA3.

[Preparation of evaluation of resin composition for gas-barrier]

Resin compositions having compositions (weight ratio) shown in Tables 2 and 3 were prepared to produce pellets and films therefrom. The produced pellets and films were evaluated with respect to hydrogen dissolution amount, flex crack resistance, and hydrogen brittleness resistance. The evaluation results are shown in Tables 2 and 3. Photographs of the resin composition Nos. 4, 5, 7, and 13 of scanning electron micrograph (10000 magnification) were shown in Figs. 6 to 9 respectively. The white line bottom right in the photograph represents a length of 1 μm.

For their comparison, the evaluation result of the composition No. 4 is also shown in Table 3. Fig. 10 indicates the relationship between the melt viscosity and the mixing ratio of side chain 1,2-diol-containing PVA resin as the component (A) and polar functional group-containing fluororesin as the component (B) in the resin composition.

[Table 2]

| | Resin composition No. | | 1 | 2 | 3 | 4 | 5 | 6 | 7 | 8 | 9 |
|---|---|---|---|---|---|---|---|---|---|---|---|
| Composition | Side chain 1,2-diol-containing PVA 2 | | 100 | — | 90 | 80 | 70 | 80 | 80 | — | — |
| | Polar functional group-containing fluororesin | | — | 100 | 10 | 20 | 30 | — | — | — | — |
| | Nylon 11 | | — | — | — | — | — | 20 | — | — | 100 |
| | Nylon 6·66 | | — | — | — | — | — | — | 20 | 100 | |
| Evaluation | Amount of hydrogen dissolution (mass ppm) | | 4 | 19.9 | — | 20 | — | — | 35 | 448 | 569 |
| | Melt viscosity (Pa · s) | | 1406 | 1543 | 1532 | 1650 | 2103 | 1435 | 1767 | 1368 | 1557 |
| | Flex crack resistance (number of pinholes) | | Broken off | 0 | 205 | 168 | 71 | — | 250 | — | — |
| | Hydrogen brittleness resistance | blister (number) | ○ (0) | ○ (0) | ○ (0) | ○ (0) | ○ (0) | × (impossible to visually measure) | △ (61) | ○ (0) | ○ (0) |
| | | Mechanical strength | ○ | ○ | ○ | ○ | ○ | ○ | ○ | ○ | ○ |

※ "—" on the cell in evaluation indicates "not measured".

[Table 3]

| Resin composition No. | | | 11 | 12 | 13 | 14 | 15 | 4 |
|---|---|---|---|---|---|---|---|---|
| Composition | Side chain 1,2-diol-containing EVOH | | 100 | 90 | 80 | 70 | 80 | – |
| | Side chain 1,2-diol-containing PVA2 | | — | — | — | — | – | 80 |
| | Nylon 11 | | — | — | — | — | 20 | – |
| | Polar functional group-containing fluororesin | | — | 10 | 20 | 30 | — | 20 |
| Evaluation | Amount of hydrogen dissolution (60°C) (mass ppm) | | 94 | — | 98 | — | — | — |
| | Flex crack resistance (number of pinholes) | | 154 | 46 | 26 | 24 | 29 | 168 |
| | Hydrogen brittleness resistance | blister (number) | ○ (0) | ○ (0) | ○ (0) | ○ (0) | × (impossible to visually measure) | ○ (0) |
| | | Mechanical strength | ○ | ○ | ○ | ○ | △ | ○ |

※ "—" on the cell in evaluation indicates "not measured".

From the comparison of Nos. 1 and 2 with Nos. 8 and 9, it is understood that the resin composition Nos. 8 and 9 each employing polyamide-based resin was larger hydrogen dissolution amount, while the resin composition Nos. 1 and 2 each employing side chain 1,2-diol-containing PVA resin and polar functional group-containing fluororesin has smaller hydrogen dissolution amounts.

As clearly shown from the comparison of the micrographs of Nos. 4 and 5 shown in Figs. 6 and 7 respectively with the micrograph of No. 7 (Fig. 8), the combination of side chain 1,2-diol-containing PVA resin and polar functional group-containing fluororesin can provide smaller domain than the combination of side chain 1,2-diol-containing PVA resin and polyamide-based resin, which means that the former can form a fine sea-island structure. The domain sizes provided by the combination of side chain 1,2-diol-containing PVA resin and polar functional group-containing fluororesin were varied depending on the content of the polar functional group-containing fluororesin, but the combination having any content provided the domain having an average size less than 1 $\mu$m.

It is clearly understood from the comparison of No. 1 with Nos. 3-5 and 7 that the flex crack resistance of the side chain 1,2-diol-containing PVA resin was improved by combining polar functional group-containing fluororesin (Nos. 3 to 5) or polyamide-based resin (No. 7) with the side chain 1,2-diol-containing PVA resin.

Nylon 6·66 (SP=25.8) is more compatible to side chain 1,2-diol-containing vinyl alcohol-based resin than nylon 11 (SP=20.8). From the comparison between No. 6 and No. 7, it is understood that use of the polyamide-based resin having more compatible to side chain 1,2-diol-containing vinyl alcohol-based resin can prevent the generation of blister, however, the blister was still generated in the case of using more compatible nylon 6·66 (No. 7). While in the cases of Nos. 3 to 5, which are the combination of polar functional group-containing fluororesin and a side chain 1,2-diol-containing vinyl alcohol-based resin, no generation of blister was recognized.

In Fig. 10, the melt viscosity of the resin composition containing 0 wt% of polar functional group-containing fluororesin, namely PVA2 alone, the melt viscosity of the resin composition containing 100 wt% of polar functional group-containing fluororesin, namely polar functional group-containing fluororesin alone, is connected by dotted line. The dotted line indicates the assumed melt viscosity of the homogenous mixture when presuming no interaction between the component (A) and the component (B).

Any melt viscosity of the resin composition Nos. 3, 4 and 5 which contains polar functional group-containing fluororesin in the content of 10 wt%, 20 wt%, and 30 wt% respectively, was higher than the assumed melt viscosity. And

the higher the content of the polar functional group-containing fluororesin is, the more far apart from the assumed melt viscosity was. Accordingly, the inventive resin composition comprising side chain 1,2-diol-containing vinyl alcohol-based resin and polar functional group-containing fluororesin used for a gas-barrier layer is different from a mere mixture of side chain 1,2-diol-containing vinyl alcohol-based resin and polar functional group-containing fluororesin. The resin composition of the invention is supposed to be a polymer alloy in which an enhanced interface is formed by chemical interaction between both components.

As seen from Nos. 11 to 14 in Table 3, the flex crack resistance of the resin composition was improved by blending polar functional group-containing fluororesin with side chain 1,2-diol-containing EVOH resin, without imparting the hydrogen brittleness resistance of side chain 1,2-diol-containing EVOH resin. In the case that the mixing ratio (side chain 1,2-diol-containing EVOH resin/polar functional group-containing fluororesin) is from 9/1 to 7/3, the higher content of the polar functional group-containing fluororesin is, the less of the number of pinholes and the more excellent in flex crack resistance are.

While in the case of resin composition containing nylon 11, although the flex crack resistance of the resin composition was superior to that of the side chain 1,2-diol-containing EVOH resin alone as seen from the comparison between Nos. 11 and 15, the hydrogen brittleness resistance of the resin composition was inferior to that of the side chain 1,2-diol-containing EVOH resin alone as seen from the comparison of Nos. 11 and 12-14 with No. 15.

As shown in Fig. 9, it is understood that the resin composition comprising the polar functional group-containing fluororesin and the side chain 1,2-diol-containing EVOH resin provided small-sized domains, which means the component (B) was finely dispersed.

As seen from the comparison of Nos. 12 to 14 with Nos. 3 to 5, the use of the side chain 1,2-diol-containing EVOH resin as a vinyl alcohol-based resin, is capable of providing a resin composition with more enhanced flex crack resistance than the use of side chain 1,2-diol-containing PVA resin.

[Production and evaluation of hose Nos. 20 to 23]

Hoses 8.3 mm in inner diameter, 10.3 mm outer in diameter, and 1 m in length, were produced by extrusion molding from a resin composition as shown in Table 4, the resulting hoses had a laminate structure shown in Table 4 respectively. The reinforcing layer made of poly-p-phenylene benzbisoxazole (PBO) fiber as a high strength fiber having a thickness of 2 mm covers over the outer layer. Thus a hose 8.3 mm in inner diameter, 16 mm in outer diameter, and 1 m in length was formed.

70 MPa of hydrogen gas was flown in the obtained reinforcing layer covering hose Nos. 20 to 23 for 1000 hours, the hydrogen amount leaked outside the hose was measured. The measurement result was converted into a hydrogen permeation amount (cc/m·hr) of the hose having the same thickness for 1 hour. Their results are shown in Table 4.

[Table 4]

| Hose No. | Layer construction | | | | Average hydrogen permeation rate (cc/m·hr) |
|---|---|---|---|---|---|
| | Reinforcing layer | Outer layer | Intermediate layer (gas-barrier layer) | Inner layer | |
| 20 | PBO reinforcing fiber | Nylon 11 (1000 μm) | - | - | 163 |
| 21 | PBO reinforcing fiber | Nylon 11 (800 μm) | PVA composition No. 4 (100 μm) | Polar functional group-containing fluororesin, (100 μm) | 2 |
| 22 | PBO reinforcing fiber | Nylon 11 (800 μm) | EVOH composition No. 13 (100 μm) | Polar functional group-containing fluororesin (100 μm) | 15 |
| 23 | PBO reinforcing fiber | Nylon 11 (900 μm) | PVA composition No. 7 (100 μm) | - | 49 |

The hose No.22, which employs a polymer alloy of side chain 1,2-diol-containing EVOH resin and polar functional group-containing fluororesin for a gas-barrier layer, and includes a polar functional group-containing fluororesin layer as an inner layer, was achieved to lower the hydrogen permeation amount, as compared with the hose No. 23 employing

the resin composition No. 7 for the gas-barrier layer. The resin composition No.7 employs the combination of polyamide-based resin and side chain 1,2-diol-containing PVA resin having a smaller hydrogen permeation coefficient than the side chain 1,2-diol-containing EVOH resin.

The hose No. 21, which has a gas-barrier layer made of a polymer alloy of side chain 1,2-diol-containing PVA-based resin and polar functional group-containing fluororesin and an inner layer of a modified fluororesin, exhibited smaller hydrogen permeation, as compared with the hose Nos. 23 and 22. The hose No. 23 employs the resin composition No. 7 containing side chain 1,2-diol-containing PVA-based resin and polyamide resin doubling as an inner layer. The hose No. 22 has a gas-barrier layer of the resin composition as a polymer alloy of side chain 1,2-diol-containing EVOH resin and polar functional group-containing fluororesin, and an inner layer of a modified fluororesin. From these results, it is understood that the resin composition comprising side chain 1,2-diol-containing PVA resin and polar functional group-containing fluororesin can exhibit significantly excellent hydrogen gas-barrier property.

[Production and evaluation of hose Nos. 24 to 28]

1 m long multilayer hose Nos. 24 to 28 each having an outer layer 800 μm in thickness, intermediate layer 100 μm in thickness, and inner layer 100 μm in thickness was produced from the resin or resin composition respectively shown in Table 5 by extrusion molding. The extruded hose was covered with reinforcing layer 2 mm in thickness containing poly-p-phenylene benzbisoxazole (PBO) fiber as a high strength fiber to form a hose 8.3 mm in inner diameter, 16 mm in outer diameter, and 1 m in length.

The resulting hose Nos. 24 to 28 each having reinforcing layer was subjected to hydrogen exposure cycles after measuring average hydrogen permeation amount. The measurement values of average hydrogen permeating amount and evaluation result of the repeated hydrogen exposure are shown in Table 5. Linear expansion coefficient of nylon 11, EVOH resin composition Nos. 13 and 14, and PVA resin composition No. 4 were measured, and the measurement results are shown in Table 6.

[Table 5]

| Hose No. | Layer construction | | | | Average hydrogen permeation rate before test (cc/m·hr) | Result of high-pressure hydrogen exposure cycles |
|---|---|---|---|---|---|---|
| | Reinforcing layer | Outer layer (800 μm) | Intermediate layer (100 μm) | Inner layer (100 μm) | | |
| 24 | PBO reinforcing fiber | Nylon 11 | Carboxylic acid-modified LDPE | EVOH composition No. 14 | 11 | ○ |
| 25 | PBO reinforcing fiber | Nylon 11 | EVOH composition No. 14 | Carboxylic acid-modified LLDPE | 22 | ○ |
| 26 | PBO reinforcing fiber | Nylon 11 | EVOH composition No. 14 | Carboxylic acid-modified PP | - | Δ |
| 27 | PBO reinforcing fiber | Nylon 11 | EVOH composition No. 14 | Nylon 6·66 | 23 | ○ |
| 28 | PBO reinforcing fiber | Nylon 11 | PVA composition No. 4 | Carboxylic acid-modified LDPE | 1.1 | × |

[Table 6]

| | Average linear expansion coefficient ($10^{-5}$/°C) | |
|---|---|---|
| | -60~40°C | 40~80°C |
| Nylon 11 | 9.3 | 19.3 |

(continued)

| | Average linear expansion coefficient ($10^{-5}$/°C) | |
|---|---|---|
| | -60~40°C | 40~80°C |
| EVOH composition No. 13 | 5.7 | 12 |
| EVOH composition No. 14 | 6.1 | 10.1 |
| PVA composition No. 4 | 4.4 | 5.8 |

Hose Nos. 25, 26 and 27 have an inner layer of different material from one another. These hoses exhibited a distinctive level of damage in gas-barrier layer after the hydrogen exposure cycles from one another due to different types of resin of the inner layer. This is supposed to result from the difference in flexion frequency and flexion level during the repeated hydrogen exposure based on the ratio of linear expansion coefficient of materials of inner layer to gas-barrier layer, i.e. resin for inner layer/resin composition for gas-barrier layer.

The hose No. 28 employing PVA resin composition No. 4 for the gas-barrier layer exhibited less hydrogen permeation amount and more excellent gas-barrier property than hose Nos. 25 to 27 each employing EVOH resin composition No. 14 for their gas-barrier layers. However, the gas-barrier layer of the hose No. 28 was broken by high-pressure hydrogen exposure cycles, and therefore exhibited gas-barrier property lower than the hose Nos. 25 to 27.

This is supposed to result from that the ratio of average linear expansion coefficient of nylon 11 for the outer layer to PVA resin composition No. 4 for the gas-barrier layer, i.e. resin for the outer layer/resin composition for gas-barrier layer, is larger than the ratio of average linear expansion coefficient of nylon 11 for the outer layer to EVOH resin composition No. 14 for the gas-barrier layer. As for the flexion frequency and flexion level caused by hydrogen exposure cycles, the hose No. 28 were larger than the hose Nos. 25, 26 or 27, due to the differences in expansion of layers, and thereby damage received in the gas-barrier layer tended to be increased. Moreover, it is supposed that the increase of the damage received was due to the fact that the hose No. 28 employed PVA resin composition No. 4 having less flex crack resistance than EVOH resin composition No. 14 for the gas-barrier layer.

From these reasons, the resin composition containing side chain 1,2-diol-containing EVOH resin as a vinyl alcohol-based resin is suitable for the usage including a hose subjected to repetitive flexion. On the other hand, the resin composition containing side chain 1,2-diol-containing PVA resin as a vinyl alcohol-based resin is suitable for the usage including a gas-barrier layer of a storage vessel without significantly requiring flex crack resistance, because the side chain 1,2-diol-containing PVA resin is more excellent in gas-barrier property than side chain 1,2-diol-containing EVOH resin.

The ratio of average linear expansion coefficients of nylon 11 for the outer layer to EVOH resin composition No. 14 for the intermediate layer, i.e. nylon 11 for outer layer/resin composition for gas-barrier layer, is 1.6 in the both ranges of -60 to 40 °C and 40 to 80 °C. While the ratio of average linear expansion coefficients of nylon 11 for the outer layer to PVA resin composition No. 4 for the intermediate layer is 2.1 in the range of -60 to 40 °C and 3.3 in the range of 40 to 80 °C.

Accordingly, in the case of multilayer structures, materials for each layer of the multilayer structure is recommended to be chosen so that the ratio of average linear expansion coefficients is usually 2 or less. Although the hose No. 28 was evaluated as "×" for the high-pressure hydrogen gas exposure cycles, better evaluation result is expected by choosing materials for outer layer, inner layer, and reinforcing layer so that the ratios of the average linear expansion coefficients of PVA resin composition for the gas-barrier layer to the respective layers are similar values.

## INDUSTRIAL APPLICABILITY

The high-pressure gas hose or storage vessel of the present invention has excellent gas-barrier property and flexibility, in particular, excellent gas-barrier property and hydrogen brittleness resistance against small molecular gas like hydrogen as well as high extension and flexibility. Accordingly, it is useful for high-pressure hydrogen gas supply hose for supplying hydrogen gas to fuel cell, high-pressure gas storage vessel at a gas station, or hydrogen gas fuel storage vessel for vehicle.

## Claims

**1.** A high-pressure gas hose or storage vessel comprising at least one layer of the resin composition comprising

(A) vinyl alcohol-based resin containing 1,2-diol structural unit represented by the following general formula (1),

and

(B) fluororesin containing polar functional group capable of reacting with or forming hydrogen bond(s) with hydroxyl group,

[formula 1]

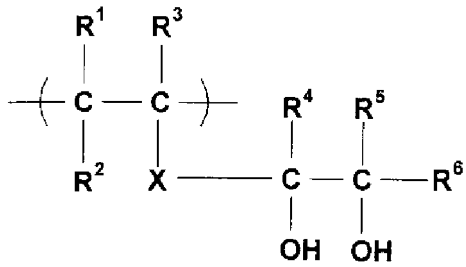

(1)

wherein each of $R^1$ to $R^3$ is independently hydrogen or an organic group, X is single bond or a binding chain, and each of $R^4$ to $R^6$ is independently hydrogen or an organic group.

**2.** The high-pressure gas hose or storage vessel according to claim 1, wherein a content ratio (A/B) of the (A) vinyl alcohol-based resin to the (B) polar functional group-containing fluororesin is in the range of 9.5/0.5 to 5/5 on the basis of weight.

**3.** The high-pressure gas hose or storage vessel according to claim 1 or 2, wherein the polar functional group of the fluororesin (B) is carbonyl-containing group or hydroxyl group.

**4.** The high-pressure gas hose or storage vessel according to any one of claims 1 to 3, wherein the carbonyl-containing group is at least one selected from the group consisting of carbonate group, haloformyl group, aldehyde group, ketone group, carboxyl group, alkoxycarbonyl group, carboxylic anhydride group, and isocyanate group.

**5.** The high-pressure gas hose or storage vessel according to any one of claims 1 to 4, wherein the (B) polar functional group-containing fluororesin is a copolymer containing at least tetrafluoroethylene as a constituent monomer.

**6.** The high-pressure gas hose or storage vessel according to claim 5, wherein the (B) polar functional group-containing fluororesin further contains ethylene as a constituent monomer.

**7.** The high-pressure gas hose or vessel according to claim 6, wherein the (B) fluororesin constituting the polar functional group-containing fluororesin is at least one selected from the group consisting of ethylene/tetrafluoroethylene-based copolymer, ethylene/tetrafluoroethylene/hexafluoropropylene-based copolymer, ethylene/tetrafluoroethylene/$CH_2$=CH-Rf (Rf is perfluoroalkyl group having from 2 to 6 carbon atoms)-based copolymer, and ethylene/tetrafluoroethylene/hexafluoropropylene/$CH_2$=CH-Rf (Rf is perfluoroalkyl group having from 2 to 6 carbon atoms)-based copolymer.

**8.** The high-pressure gas hose or storage vessel according to any one of claims 1 to 7, wherein the (B) polar functional group-containing fluororesin has a melting point of 120 to 240 °C.

**9.** The high-pressure gas hose or storage vessel according to any one of claims 1 to 8, wherein the (A) vinyl alcohol-based resin contains side chain 1,2-diol structural unit in the content of 0.1 to 30 mol%.

**10.** The high-pressure gas hose or storage vessel according to claim 9, wherein the (A) vinyl alcohol-based resin is (A') polyvinyl alcohol resin containing a structural unit other than the side chain 1,2-diol structural unit and the vinyl alcohol structural unit in the content less than 20 mol %.

**11.** The high-pressure gas hose or storage vessel according to claim 10, wherein the content ratio of side chain 1,2-diol structural unit in the polyvinyl alcohol resin (A') is 2 to 15 mol%.

**12.** The high-pressure gas hose or storage vessel according to claim 9, wherein the (A) vinyl alcohol-based resin is (A") saponified ethylene-vinyl ester copolymer containing ethylene unit of 20 to 60 mol%.

**13.** The high-pressure gas hose or storage vessel according to claim 12, wherein the content ratio of the side chain 1,2-diol structural unit in the saponified ethylene-vinyl ester-based copolymer (A") is in the range of 0.5 to 10 mol%.

**14.** The high-pressure gas hose or storage vessel according to any one of claims 1 to 13, having a multilayer structure which has a ratio of average linear expansion coefficients of a material for a layer other than the resin composition layer to the resin composition being in the range of 2 or less.

**15.** The high-pressure gas hose or storage vessel according to claim 14, wherein the multilayer structure comprises an outer layer, an intermediate layer, and an inner layer, and wherein the intermediate layer or the inner layer is made of the resin composition.

**16.** The high-pressure gas hose or storage vessel according to claim 14 or 15, wherein at least one of the layers other than the layer of the resin composition is made from at least one material selected from the group consisting of polyolefin-based resin, polyamide-based resin, and polar functional group-containing fluorine-based resin.

**17.** The high-pressure gas hose or storage vessel according to any one of claims 1 to 16, being used for high-pressure gas of molecular weight less than 10.

**18.** A high-pressure gas storage vessel comprising at least one layer of the resin composition comprising

(A') polyvinyl alcohol resin included in vinyl alcohol-based resin containing 1,2-diol structural unit represented by the following general formula (1), and containing a structural unit other than the side chain 1,2-diol structural unit and a vinyl alcohol structural unit in the content less than 20 mol%, and
(B) fluororesin having polar functional group capable of reacting with or forming hydrogen bond(s) with hydroxyl group:

[formula 1]

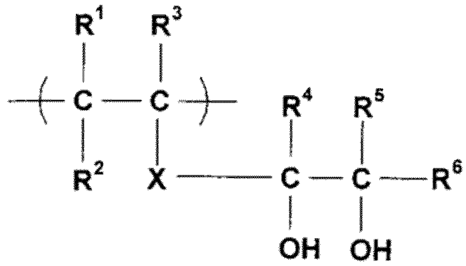
(1)

wherein each of $R^1$ to $R^3$ is hydrogen or an organic group independently, X is single bond or a binding chain, each of $R^4$ to $R^6$ is hydrogen or organic group independently.

**19.** A high-pressure gas hose comprising at least one layer of a resin composition comprising

(A") saponified ethylene-vinyl ester-based copolymer containing a structural unit and ethylene unit represented by the following general formula (1), and the content of the ethylene unit being from 20 to 60 mol%, and
(B) fluororesin containing polar functional group capable of reacting with or forming hydrogen bond(s) with hydroxyl group:

[formula 1]

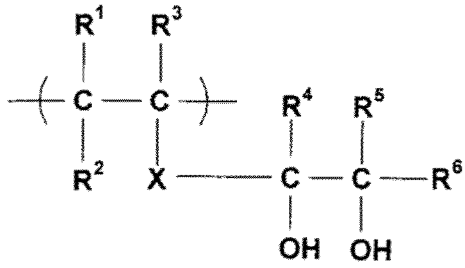

(1)

wherein each of $R^1$ to $R^3$ is hydrogen or an organic group independently, X is single bond or a binding chain, and each of $R^4$ to $R^6$ is hydrogen or an organic group independently.

[Fig. 1]

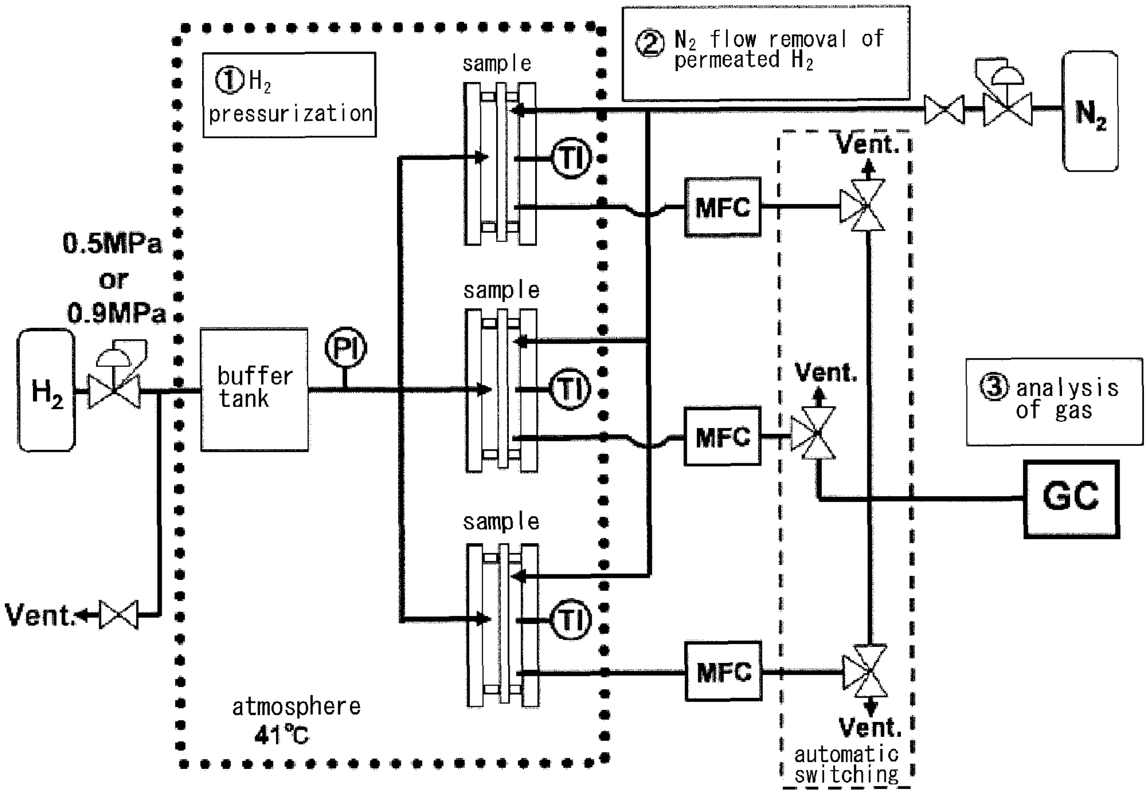


[Fig. 2]

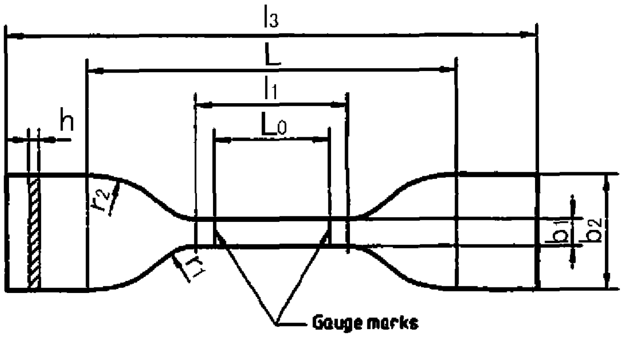


| | |
|---|---|
| $b_1$ | Width of narrow parallel-sided portion: 6 mm ± 0,4 mm |
| $b_2$ | Width at ends: 25 mm ± 1 mm |
| $h$ | Thickness: ⩽ 1 mm |
| $L_0$ | Gauge length: 25 mm ± 0,25 mm |
| $l_1$ | Length of narrow parallel-sided portion: 33 mm ± 2 mm |
| $L$ | Initial distance between grips: 80 mm ± 5 mm |
| $l_3$ | Overall length: ⩾ 115 mm |
| $r_1$ | Small radius: 14 mm ± 1 mm |
| $r_2$ | Large radius: 25 mm ± 2 mm |

[Fig. 3]

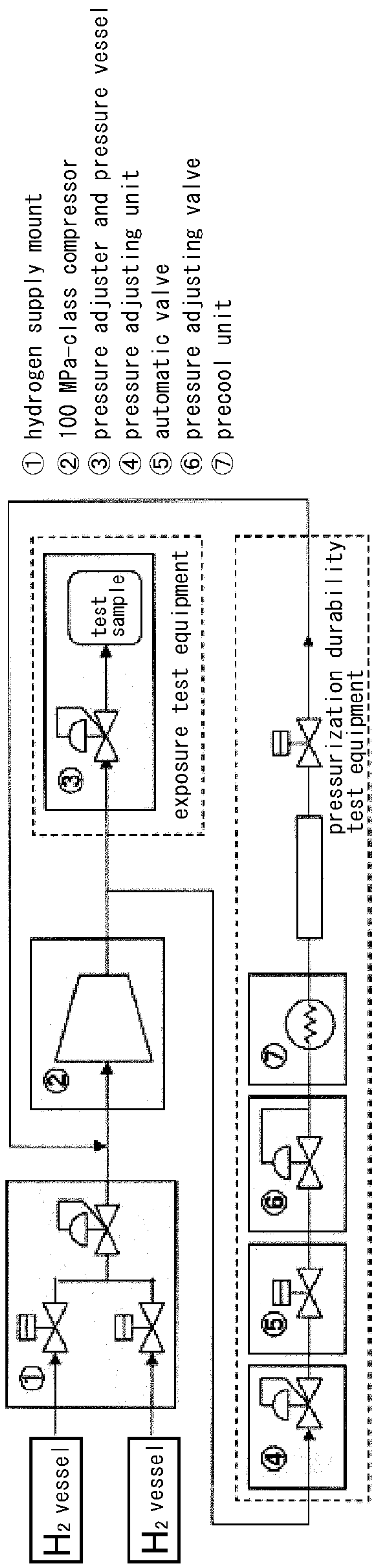
① hydrogen supply mount
② 100 MPa-class compressor
③ pressure adjuster and pressure vessel
④ pressure adjusting unit
⑤ automatic valve
⑥ pressure adjusting valve
⑦ precool unit
test sample
exposure test equipment
pressurization durability test equipment
H2 vessel
H2 vessel
①
②
③
④
⑤
⑥
⑦

[Fig. 4]

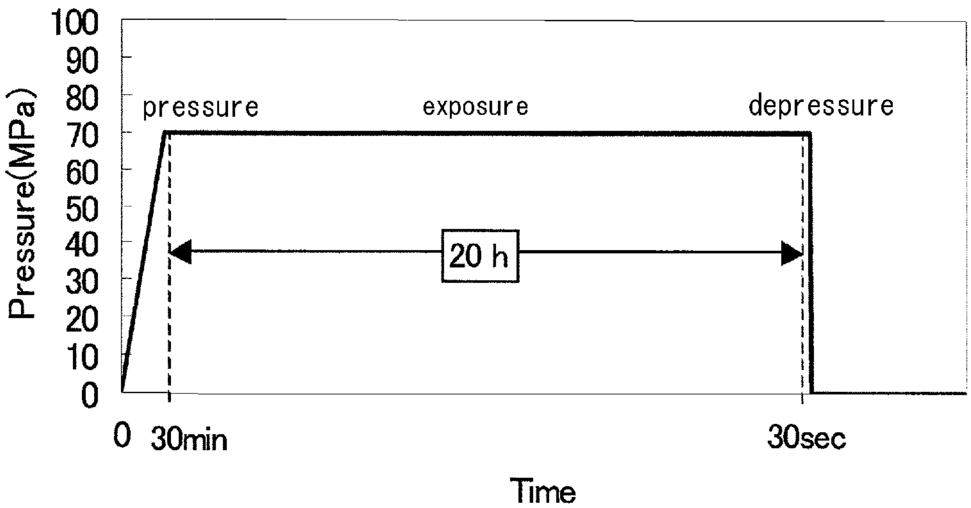
100
90
80
70
60
50
40
30
20
10
0
Pressure(MPa)
pressure
exposure
depressure
20 h
0
30min
30sec
Time

[Fig. 5]

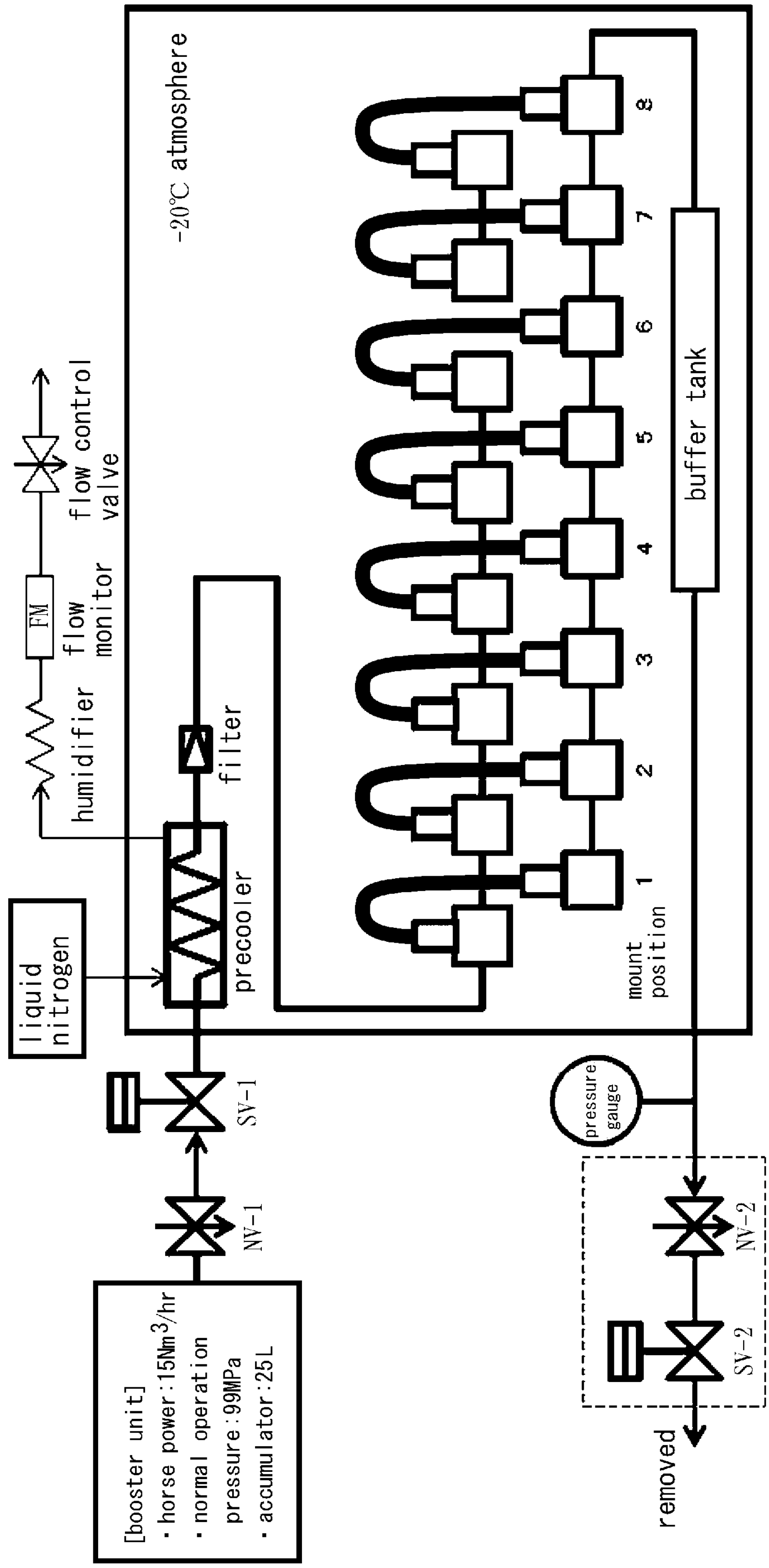

[booster unit]
· horse power:15Nm3/hr
· normal operation pressure:99MPa
· accumulator:25L
NV-1
SV-1
liquid nitrogen
precooler
humidifier
FM
flow monitor
flow control valve
filter
-20℃ atmosphere
mount position
1
2
3
4
5
6
7
8
buffer tank
pressure gauge
NV-2
SV-2
removed

[Fig. 6]

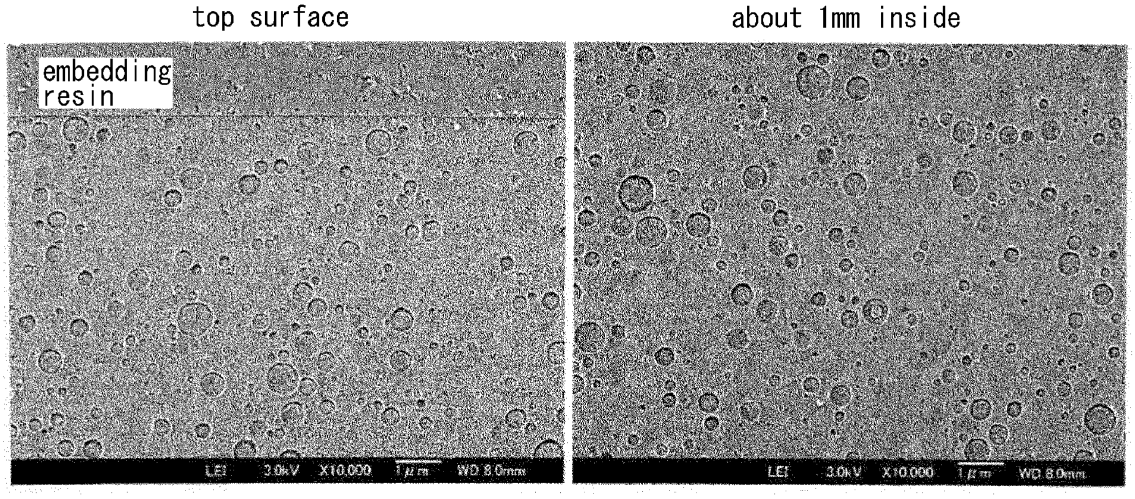


[Fig. 7]

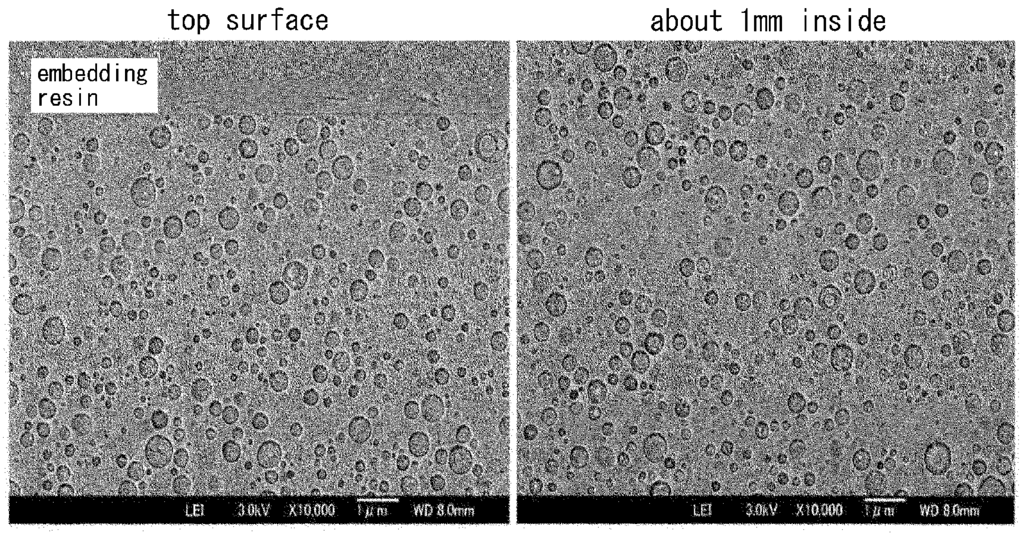


[Fig. 8]

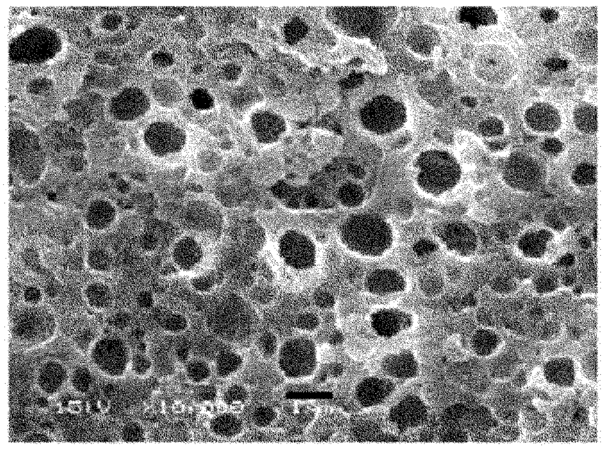

[Fig. 9]

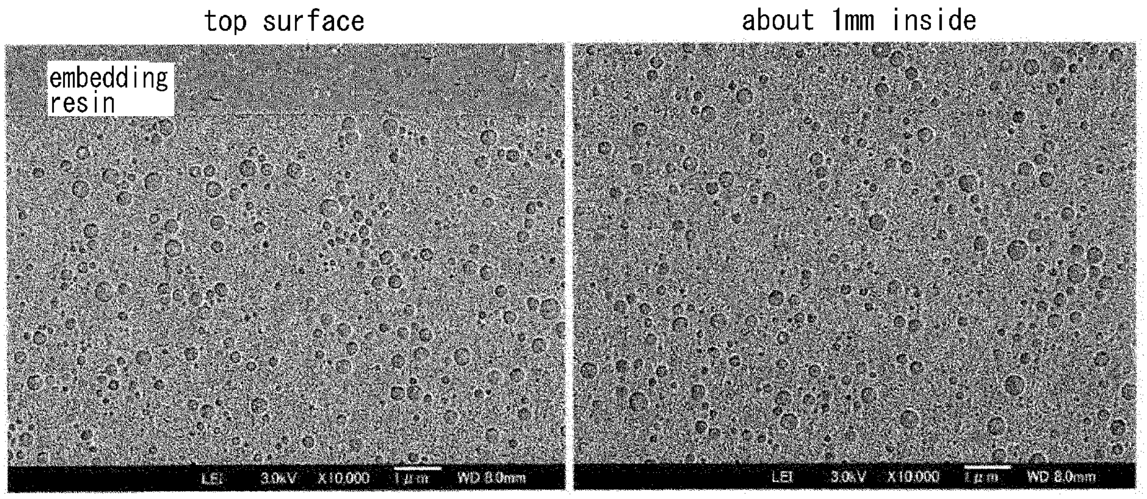
top surface
about 1mm inside
embedding resin
LEI 3.0kV X10,000 1μm WD 8.0mm
LEI 3.0kV X10,000 1μm WD 8.0mm

[Fig. 10]

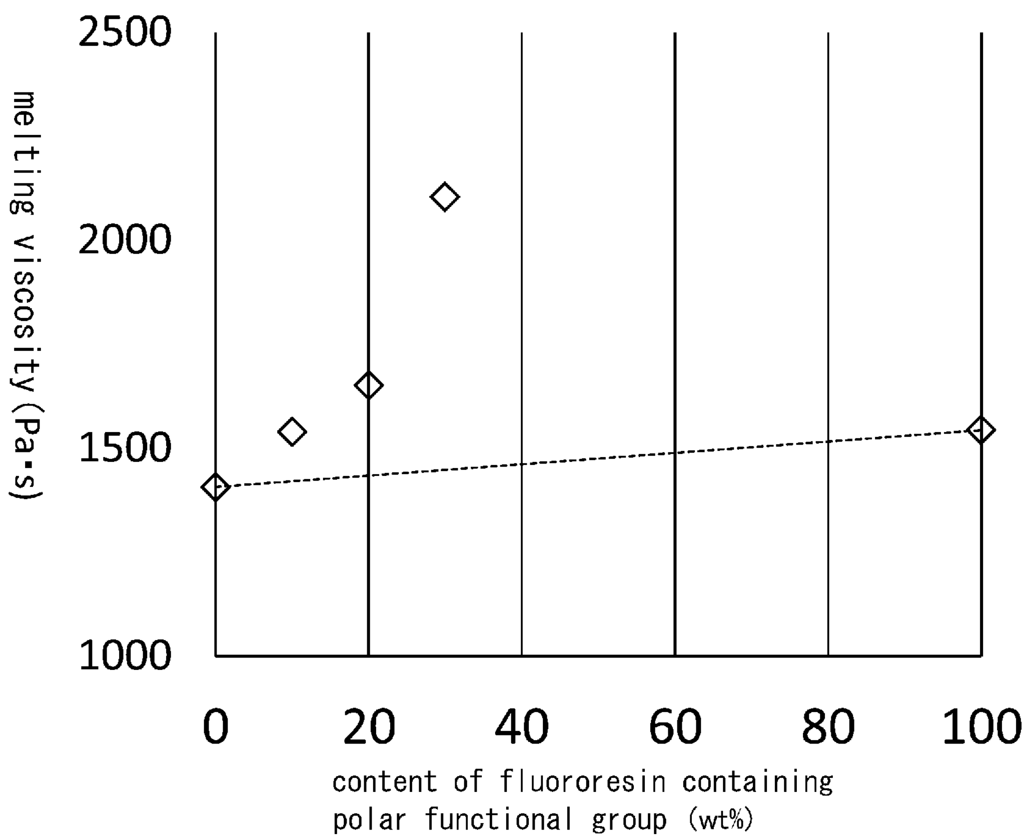
2500
2000
1500
1000
melting viscosity (Pa·s)
0
20
40
60
80
100
content of fluororesin containing polar functional group (wt%)

## INTERNATIONAL SEARCH REPORT

International application No.
PCT/JP2013/070887

A. CLASSIFICATION OF SUBJECT MATTER
*F16L11/04*(2006.01)i, *B32B1/02*(2006.01)i, *B32B1/08*(2006.01)i, *B32B27/30*(2006.01)i, *C08L27/12*(2006.01)i, *C08L29/04*(2006.01)i

According to International Patent Classification (IPC) or to both national classification and IPC

B. FIELDS SEARCHED

Minimum documentation searched (classification system followed by classification symbols)
F16L11/04, B32B1/02, B32B1/08, B32B27/30, C08L27/12, C08L29/04, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-328195 A (Daikin Industries, Ltd.), 07 December 2006 (07.12.2006), claims; paragraphs [0025] to [0037], [0062], [0063]; examples (Family: none) | 1-16 |
| Y | WO 2012/005288 A1 (The Nippon Synthetic Chemical Industry Co., Ltd.), 12 January 2012 (12.01.2012), claims; paragraphs [0035] to [0042] & JP 2012-31405 A & US 2013/0065001 A1 & EP 2592114 A1 | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 October, 2013 (08.10.13) | 15 October, 2013 (15.10.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2013/070887

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2009/128411 A1 (The Nippon Synthetic Chemical Industry Co., Ltd.), 22 October 2009 (22.10.2009), entire text & JP 2010-260878 A & US 2011/0020626 A1 & EP 2267074 A1 & CN 102007179 A | 1-16 |
| A | JP 2012-46744 A (The Nippon Synthetic Chemical Industry Co., Ltd.), 08 March 2012 (08.03.2012), claims; paragraphs [0001], [0085] & US 2013/0131270 A1 & EP 2599831 A1 & WO 2012/014981 A1 & CN 103052679 A | 1-18 |
| P,A | JP 2013-71979 A (The Nippon Synthetic Chemical Industry Co., Ltd.), 22 April 2013 (22.04.2013), claims (Family: none) | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007015279 A
- JP 2009019717 A
- JP 2006168358 A
- JP 2007218338 A
- JP 2010031993 A
- JP 2005068300 A
- JP 2002284818 A
- JP 2004075866 A
- JP 2004285143 A
- JP 2004359965 A
- JP 2006096815 A
- JP 2004238405 A


### Non-patent literature cited in the description


- *Japan Society of Mechanical Engineers collection of papers A edit.,* vol. 75 (756), 1063-1073